(19) Europäisches Patentamt

European Patent Office

Office européen des brevets

(11) **EP 4 459 380 B1**

(12) **EUROPEAN PATENT SPECIFICATION**

(45) Date of publication and mention
of the grant of the patent:
**06.05.2026 Bulletin 2026/19**

(21) Application number: **24170007.9**

(22) Date of filing: **12.04.2024**

(51) International Patent Classification (IPC):
*G03H 1/04* (2006.01)     *G03H 1/08* (2006.01)
*G03H 1/22* (2006.01)     *G03H 1/30* (2006.01)

(52) Cooperative Patent Classification (CPC):
**G03H 1/2294; G03H 1/0486; G03H 1/0808;
G03H 1/22;** G03H 2001/0491; G03H 2001/0825;
G03H 2001/0883; G03H 2001/2244;
G03H 2001/303

(54) **PICTURE DISTORTION**

**BILDVERZERRUNG**

**DISTORSION D'IMAGE**

(84) Designated Contracting States:
**AL AT BE BG CH CY CZ DE DK EE ES FI FR GR
HR HU IE IS IT LI LT LU LV MC ME MK MT NL NO
PL PT RO RS SE SI SK SM TR**

(30) Priority: **04.05.2023 GB 202306604**

(43) Date of publication of application:
**06.11.2024 Bulletin 2024/45**

(73) Proprietor: **Envisics Ltd
Milton Keynes MK1 1PT (GB)**

(72) Inventors:
• **CRESPEL, Thomas
Milton Keynes, MK1 1PT (GB)**
• **COONEY, Rory
Milton Keynes, MK1 1PT (GB)**

(74) Representative: **Greenaway, Martin William
Apollo House
6 Bramley Road
Milton Keynes MK1 1PT (GB)**

(56) References cited:
**EP-A1- 3 839 638     US-A1- 2014 036 180**

## Description

FIELD

The present disclosure relates to holographic projection of a target image. More specifically, the present disclosure relates to a method of calculating a distortion map for pre-distorting the target image to compensate for distortions caused by the holographic projector. Even more specifically, the present disclosure relates to said method being a method for performing in real-time. Some embodiments relate to a holographic projector, picture generating unit or head-up display.

## BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device.

The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD". EP 3 839 638 A1 discloses a method for calculating a map in real-time, the map being adapted to distort a target picture to be projected by a holographic projector and to compensate for changes of the holographic projector.

## SUMMARY

The invention is directed to a method of calculating a map in real-time as recited in appended independent claim 1, and to a holographic projector as recited in appended independent claim 15.

Other aspects of the invention are recited in the appended dependent claims.

In general terms, there is provided a real-time method of calculating a map for processing, e.g. (pre-)distorting, a target picture to be projected by a holographic projector, the map being suitable for pre-distorting the target picture to compensate for temperature such as the current temperature of the holographic projector.

A holographic projector may comprise a display device such as a spatial light modulator. The display device may be arranged to display a hologram of a target picture (for example, a hologram of a pre-distorted picture). The hologram may be a computer-generated hologram. The display device may be arranged to spatially modulate light incident thereon in accordance with the hologram displayed on the display device. The holographic projector may be arranged to direct or relay the spatially modulated light (spatially modulated in accordance with the hologram) towards a viewing plane or eye-box. The holographic projector may be arranged such that the spatially modulated light forms a holographic reconstruction of the picture on a replay plane. The holographic projector may be arranged such that an image (such as a virtual image) of the holographic reconstruction (of the target picture) is visible (i.e. viewable) from the viewing plane or eye-box.

The image of the holographic reconstruction of the target picture may be distorted relative to the holographic reconstruction itself. Conceptually, it is possible to consider a plurality of points (e.g. pixels or groups of pixels) of the holographic reconstruction and the corresponding plurality of points of the image of the holographic reconstruction. A distribution of points, spots, pixels or features in the (image of the) holographic reconstruction may be positionally different to the respective points, spots, pixels or features of the target picture (encoded in the hologram). For example, at least some of the image points of the image of the holographic reconstruction may appear positionally translated or shifted with respect to adjacent image points relative to the respective image points or image features of the holographic reconstruction. Different image points or image features within the image of the holographic reconstruction may have been shifted or translated by a different amount. In other words, the amount of translation or shift of image points may be non-uniform across the image of the holographic reconstruction. The holographic projector may comprise one or more optical components to relay the spatially modulated light from the display device. Examples of optical components include lenses and mirrors. The optical components may provide magnification. One source of the distortion may be as a result of optical misalignments of optical components, for example because of manufacturing tolerances. The distortion may change in response to changes in temperature of the holographic projector as changes in temperature may cause (optical) components of the holographic projector to expand or contract and so changing the distortion. Changes in temperature may also cause changes in the wavelength of light emitted from a light source of the holographic projector (said light being used to illuminate the display device). For example, the light source may be a coherent light source such as a laser. The wavelength of the coherent light source / laser may change with changes in temperature. Distortion may result in the image of the holographic reconstruction appearing warped and / or skewed relatively to the holographic reconstruction (and/or target picture) and so distortion may adversely affect the viewing experience and the quality (e.g. faithfulness) of an individual holographic reconstruction. The quality or faithfulness of the image may be quantified in any number of different ways known in the art of optics / image formation. The person skilled in the art of optics will be familiar with these techniques and the present disclosure is not limited to any particular method of measuring/quantifying image quality or image distortion.

It may therefore be said that, in broad terms, the present disclosure relates to a method increasing image quality or decreasing image distortion.

It is particular problem that distortion changes with wavelength in holographic projectors arranged to display a multi-colour reconstruction, for example using a plurality of single colour channels (i.e. a plurality of single channels operating at different wavelengths). In such examples, each single colour channel may be arranged to holographically project a single colour image (e.g. a red, green or blue image). The holographic projector may be arranged to independently (in space and/or in time) project a plurality of single colour images (e.g. independently project a red image, a green image, and a blue image). A (single colour) holographic reconstruction associated with each channel may be formed on the replay plane. A multi-colour holographic reconstruction is formed as the combination of a plurality of single colour holographic reconstructions at the replay plane. The plurality of single colour channels may at least partially overlap and may even use the same spatial light modulator such as in a frame sequential colour scheme. Ideally, the plurality of single colour holographic reconstructions would be aligned with one another. This may mean that, ideally, corresponding image points of each of the single colour holographic reconstructions are aligned with one another at the replay plane. However, because each of the single colour images / single holographic reconstructions may be distorted differently to one another because each single colour has a different wavelength (and the amount of distortion is dependent on wavelength), there may be complex misalignments that occur between the different colour channels. The misalignment may be non-uniform. The human eye is sensitive to misalignment and the perceived image quality can be significantly reduced by even a relatively small misalignment between image pixels of single colour images. The problem is further pronounced in a head-up display comprising an optical replay system designed to perform complex optical processing and satisfy strict optical and physical constraints.

It is possible to compensate for distortion of (an image of) a holographic reconstruction by pre-distorting the target picture prior to display and/or prior to hologram calculation. This may comprise transforming image points of the target picture in an opposite fashion to the distortion caused by the holographic projector (at a given temperature and wavelength) and then displaying a hologram of the pre-distorted target picture on the display device of the holographic projector. Distortions caused by the holographic projector may thus be already compensated for, resulting in the holographic reconstruction appearing as intended. A distortion map can be used to pre-distort the target picture. The distortion map may comprise a plurality of mappings for an array of two-dimensional coordinates. The array of two-dimensional coordinates may relate to coordinates of the target picture. Each mapping of the distortion may transform one of the two-dimensional coordinates. The distortion map may have been determined and validated by experimentation and / or simulation in order to ensure that mappings pre-distort the target picture in a way that accurately compensates for distortions caused by the holographic projector such that the holographic reconstruction appears as intended. The transformed two-dimensions coordinates may be used to pre-distort the target picture.

As above, the distortion of the holographic reconstruction may depend on the current temperature of the holographic projector and / or the wavelength of spatially modulated light (in accordance with the respective hologram). Thus, a first distortion map may only accurately pre-distort a target picture when spatially modulated light of a first wavelength is used and at a first temperature. For example, the first distortion map may not accurately pre-distort a target picture when spatially modulated light of a second wavelength (different to the first wavelength) is used and / or when the holographic projector is at a second temperature (different to the first temperature). The conventional solution to this problem is to program a memory of the holographic projector to store a plurality of distortion maps that have been determined and validated at a plurality of different temperatures and wavelengths. The holographic projector could be arranged to select an appropriate distortion map from the memory for a given scenario using a look-up table. However, the inventors have recognised that this solution is resource inefficient / non-optimal because it would require a very large number of distortion maps to be determined and validated. For example, holographic projectors that are intended for use in vehicles, such as part of a head-up display in a vehicle, must be able to operate over a large temperature range (which may extend over a range of at least 100 degrees Celsius). To cover such a large range, a large number of distortion maps would need to be determined and validated at different temperatures (e.g. for every other degree Celsius of the temperature range). For multi-colour holographic projectors, this would need to be repeated for each colour channel. The inventors have recognised that it would be very time consuming and resource intensive to determine and validate such a large number of distortion maps. Furthermore, this process would need to be repeated for each model of holographic projector or when a holographic projector is used in a different context (for example, in a different vehicle having a different geometry). Furthermore, the inventors have recognised that the memory requirements to store such a large number of distortion maps may be prohibitive. Furthermore, the above described distortion maps may be part of only one of a number of calibration processes performed by the holographic projector. For example, the holographic projector may also need to calibrate the hologram to compensate for a shape of an optical combiner having a complex shape, such as a windscreen of a vehicle, and / or may adjust the hologram based on eye-tracking of a user of the holographic projector. Both of these examples may require separate calibration processes (in addition to the distortion correction that is the subject of the present disclosure). Thus, the above described pre-distortion to compensate for wavelength and temperature changes may be just a small part of the projection / calibration process. It is therefore important that each calibration step is as resource efficient as possible. This is another reason that the conventional method of fully characterizing the holographic projector at a plurality of temperatures and wavelengths is non-optimal.

To address the problems of determining and storing a large number of distortion maps, the inventors have developed a fast, resource efficient and time efficient method of calculating / determining the distortion map. This method can be performed in real-time / on the fly, for example while the holographic projector is in operation (for example, while computer generating a sequence of holograms). The method of calculating the (distortion) map according to the disclosure requires as an input only one distortion map (first distortion map) that has been pre-determined and pre-validated (at a particular first temperature) per colour channel. The method therefore advantageously avoids the need to fully characterize a holographic projector to determine distortion maps at a plurality of temperatures.

Real-time projection of a sequence of computer-generated holograms is computationally very intensive and expensive. It was counterintuitive for the inventors to add additional real-time computation steps (of calculating the distortion map, rather than retrieving the map from memory) into the holographic projection method. However, the inventors have surprisingly found that the method according to the disclosure can modify the first distortion map with simple and inexpensive calculations and that the modified map can be used to pre-distort the target picture such that the holographic reconstruction appears as intended and such that multi-colour holographic reconstructions are aligned using a process/calculation that occurs in real-time during display. In particular, after thorough simulation and experimentation, the inventors have found that the changes in position of the above-mentioned array of coordinates follows a substantially predictable relationship over a temperature range. In some embodiments, this is a linear relationship. The inventors have recognised that this relationship can be used to simply calculate a distortion map for any current temperature by modifying the first distortion map using scaled vectors representing how the array of coordinates changes between a second temperature and a third temperature. Importantly, in accordance with the present disclosure, steps of this method/calculation may be repeatedly performed by the holographic projector. For example, steps of this method may be performed every frame or sub-frame of a real-time image projection system such as one based on data streaming. Steps of this method may be performed / repeated when the current temperature changes by a predetermined amount, or more than a predetermined amount. Again, this goes against significant prejudice in the art which teaches that computation such be minimized in order to achieve good quality real-time performance. The inventors identified a simple method which they found was worth the additional processing burden.

In a first aspect of the disclosure there is provided a method of calculating a (distortion) map in real-time. The (calculated) distortion map is for distorting (also referred to herein as "pre-distorting") a target picture to be projected by a holographic projector. The (pre-) distortion of the target picture is to compensate the current temperature of the holographic projection and for changes in the current temperature of the holographic projector. The method comprises the step of receiving a calibrated map. The calibrated map comprises a plurality of mappings. Each mapping is for transforming a two-dimensional coordinate. Each two-dimensional coordinate corresponds to one or more image points of a target picture. A point or position on a two-dimensional plane defined by the two-dimensional co-coordinate may be referred to as a calibration point. Each calibration point may correspond to one or more image points of a target picture. In embodiments, each two-dimensional coordinate corresponds to one or more image points of an undistorted target picture. Each mapping of the calibrated map may be for transforming the respective two-dimensional coordinate to compensate for distortion at a predetermined first temperature. In other words, each mapping of the calibrated map may be for pre-distorting the image points of the target picture to compensate for distortions caused by the projection process at the first temperature. As used herein, the "calibrated map" refers to a distortion map that has been (fully) determined and validated through experimentation and / or simulation. The process of fully determining the calibrated map may be performed is not essential to the method of the present disclosure. As such, the step of the method comprising receiving the calibrated map may comprise receiving a pre-determined map. The pre-determined calibrated map is determined when the holographic projector is at a first temperature and when the spatially modulated light has a first wavelength. The method according to the disclosure advantageously requires receipt of only one calibrated map (at the first temperature) to calculate the (modified) map for the current temperature (when the spatially modulated light has the first wavelength). The calibrated map may be referred to herein as the first distortion map or initial distortion map.

The method further comprises the step of receiving an array of vectors. The array of vectors comprises / consists of a vector for each two-dimensional coordinate of the array of two-dimensional coordinates. There may be a one to one ratio between the number of vectors in the array of vectors and the number of two-dimensional coordinates in the array of two-dimensional coordinates. Each vector may be uniquely associated with a two-dimensional coordinate, and vice versa. Similarly there may be a one to one ratio between the number of vectors in the array of vectors and the number of mappings in the calibrated map. Each vector may be uniquely associated with a mapping in the calibrated map, and vice versa. Each vector represents a calibrated change of a respective two-dimensional coordinate (of the array of two-dimensional coordinates) over a predetermined temperature range. As used herein, the calibrated change is the change in each of the respective two-dimensional coordinates from a second temperature to a third temperature, assuming / when the two-dimensional coordinates have been transformed to compensate for distortion at the second temperature and third temperature respectively. The temperature range comprises the second and third temperatures. In some embodiments, the second temperature corresponds to a minimum temperature of the (predetermined) temperature range. In some embodiments, the third temperature corresponds to a maximum temperature of the (predetermined) temperature range. Like the calibrated map, step(s) of a method of determining the array of vectors may not be essential to the method of the present disclosure. As such, the step of the method comprising receiving a predetermined array of vectors. The array of vectors may be referred to herein as a vector map or a simulated map.

The method further comprises receiving or determining a current temperature of the holographic projector. The current temperature may be referred to herein as a fourth temperature.

The method further comprises the step of determining a scaling factor based on the difference between the current (fourth) temperature and the predetermined (first) temperature. The determination of the scaling factor being based on the different between the current (fourth) temperature and the predetermined (first) temperature may comprise an additional step or mathematical operation (in addition to determining the difference between the current temperature and the predetermined temperature). For example, the output of the difference between the current (fourth) temperature and the predetermined (first) temperature may be multiplied or divided by a constant.

The method further comprises the step of calculating a modified map based on / for the current temperature. The step of calculating the modified map comprises, for each coordinate of the array of two-dimensional coordinates: multiplying the vector that relates to the respective coordinate of the array of two-dimensional coordinates by the scaling factor to output a scaled vector; and applying the scaled vector to the respective mapping of the calibrated map. The step of applying the scaled vector to the respective mapping of the calibrated map may comprise adding or subtracting the scaled vector to the respective mapping. The step of applying the scaled vector to the respective mapping of the calibrated map may comprise outputting a modified mapping for transforming the respective two-dimensional coordinate for compensating for distortion of the target picture when projected by the holographic projector at the current (fourth) temperature.

The method further comprises the step of outputting a modified map. The modified map comprises an array of the modified mappings (calculated in the preceding step of the method).

In some embodiments, the method further comprises the step of receiving the array of two-dimensional coordinates. In some embodiments, there is a many to one ratio between the number of image points in the target picture and the number of two-dimensional coordinates in the array of two-dimensional coordinates. In other words, each two-dimensional coordinate may correspond to more than one, optionally more than five, optionally more than 10, image points. Or, there may be fewer image points than two-dimensional coordinates. As the (calibrated and modified) maps of the method comprises as many mappings as there are two-dimensional coordinates (and the calibrated map comprises as many vectors as there are two-dimensional coordinates) it is advantageous for there to be a many to one ratio between the number of image points in the target picture and the number of two-dimensional coordinates in the array of two-dimensional coordinates. This is because there are fewer mappings to be calculated in the modified map for a given number of image points and so the method is computationally less expensive than when there are a greater number of mappings. Interpolation can advantageously be used to determine an appropriate pre-distortion of the image points of the target picture when the mappings of the modified map have a many to one correspondence to image points.

The vectors of the array of vectors may have a non-uniform distribution of direction and magnitude. Typically, two-dimensional coordinates corresponding to image points closer to the centre of the target picture will be distorted less than two-dimensional coordinates closer to the edges / perimeter of the target picture. Typically, two-dimensional coordinates corresponding to image points at opposite side of the target picture will be distorted / transformed in opposite directions to one another. The array of vectors may represent these two effects. For example, the magnitude of vectors of the array of vectors may increase as the distance of the respective two-dimensional coordinate increases from the centre of the array (of two-dimensional coordinates). The direction of vectors of the array of vectors corresponding to two-dimensional coordinates on a first side of the centre of the array may be opposite to the direction of vectors of the array of vectors corresponding to two-dimensional coordinates on a second side of the centre of the array (opposite to the first side). In some embodiments, the direction of each vector of the array of vectors may be substantially parallel to a direction defined from the centre of the array (of two-dimensional coordinates) to the respective two-dimensional coordinate.

In some embodiments, the scaling factor has a linear dependence on the current / fourth temperature. After thorough simulation and experimentation, the inventors have surprisingly found that the distortion for each image point of a target picture / each calibration point represented by a respective two-dimensional coordinate changes substantially linearly with temperature. In some embodiments, the step of determining the scaling factor comprises determining the difference between the current temperature and the predetermined temperature and dividing that difference by the predetermined temperature range. In such embodiments, the scaling factor may also be referred to as a percentage. Such a scaling factor represents the change in current temperature from the first temperature as a proportion of the predetermined temperature range. If the current temperature is equal to the first temperature then the percentage change will be zero. Thus, the scaling factor is equal to zero. Otherwise, the scaling factor may be non-zero.

In some embodiments, the step of determining the scaling factor comprises calculating the following: $(T - T0) / (Tmax - Tmin)$. T is the current temperature, T0 is the predetermined temperature, Tmax is a maximum (third) temperature of the predetermined temperature range and Tmin is a minimum (second) temperature of the predetermined temperature range. In other words, the scaling factor may be equal to $(T - T0) / (Tmax - Tmin)$.

In some embodiments, the method further comprises applying the modified map to the array of two-dimensional coordinates to output a modified array of two-dimensional coordinates. In some embodiments, the method further comprises receiving a target picture comprising a plurality of image points, wherein each two-dimensional coordinate of the array of two-dimensional coordinates corresponds to one or more image points of the target picture. Each respective two-dimensional coordinate of the modified array may correspond to the same respective one or more image points of the target picture. In some embodiments, the method further comprises distorting the target picture based on the modified array of two-dimensional coordinates. In some embodiments, the method further comprises calculating a hologram of the distorted target picture.

In some embodiments, the step of determining the current / fourth temperature may comprise measuring the current / fourth temperature of the holographic projector, for example using a temperature sensor. Optionally, the temperature sensor may be arranged to measure the temperature of a light source, such as a laser, of the holographic projector. In other embodiments, the step of determining the current / fourth temperature may comprise inferring the current / fourth temperature of the holographic projector by measuring the wavelength of the spatially modulated light. For example, the method may comprise comparing the current wavelength of the spatially modulated light to an expected wavelength of the spatially modulated light. As the skilled person will appreciate, the current temperature of the holographic projector / light source of the holographic projector may be determined based on deviations of the wavelength of the light from an expected wavelength.

As described above, the method according to the disclosure may be performed in real time. The method may be performed repeatedly during operation of the holographic projector. In some embodiments, the holographic projector is arranged to project a sequence of (image) frames - e.g. at video rate - in a manner that will be familiar to the reader. Each frame may have a different hologram (having an associated different target picture). In some embodiments, the method according to the disclosure may be performed once for each frame of the sequence. Thus, the modified (distortion) map be recalculated for each frame of the sequence. The recalculated modified (distortion) map may then be applied to the respective target picture of the respective frame of the sequence (to pre-distort said target picture) and then a hologram of the pre-distorted target picture may be calculated. In other embodiments, the method according to disclosure may only be repeated when it is detected that the current temperature has changed by an amount that exceeds a threshold. In such examples, the method may comprise calculating a first modified (distortion) map at an initial temperature. The method may comprise, for each frame in the sequence, monitoring the current temperature. If the difference between the current temperature and the initial temperature is less than a threshold, the method may comprise re-using the first modified (distortion) map to pre-distort the target picture of the respective frame. If the difference between the current temperature and initial temperature is greater than a threshold, the method may comprise re-calculating the modified map (according to the method described above). The method may then comprise using the re-calculated modified map to pre-distort the target picture of the respective frame. In some embodiments, the method is performed for at least two sequential frames of an incoming stream of image frames. In some embodiments, the method is performed for every frame of an incoming stream of image frames.

In some embodiments, the target picture is a first target picture. In some embodiments, the array of two-dimensional coordinates is a first array of two-dimensional coordinates. In some embodiments, the calibrated map is a first calibrated map. In some embodiments, the array of vectors is a first array of vectors. In some embodiments, the modified map is a first modified map. In some embodiments, the method further comprises calculating a second map for distorting a second target picture to be projected by the holographic projector. The calculation of the second map may comprise receiving a second array of two-dimensional coordinates. Each two-dimensional coordinate may correspond to one or more image points of the second target picture. The second target picture may be different to the first target picture. The calculation of the second map may comprise receiving a second calibrated map for the second array of two-dimensional coordinates. The second calibrated map may comprise a mapping for each two-dimensional coordinate of the second array to transform the respective two-dimensional coordinate for compensating for distortion at a predetermined temperature. The predetermined temperature may or may not be the same as the predetermined first temperature referred to above. The calculation of the second map may comprise receiving a second array of vectors, the second array of vectors comprising a vector for each two-dimensional coordinate (of the second array of two-dimensional coordinates). Each vector may represent a change in a position of the respective two-dimensional coordinate over the predetermined temperature range. The calculation of the second map may comprise calculating a second modified map based on the current temperature by, for each coordinate of the second array of two-dimensional coordinates: multiplying the vector that relates to the respective coordinate of the second array of two-dimensional coordinates by the scaling factor to output a scaled vector; and applying the scaled vector to the respective mapping of the second calibrated map; outputting the second modified map.

The mappings of the first calibrated map and the vectors of the first array of vectors may have been determined for when a first wavelength is used in the holographic projection of the first target picture. The mapping of the second calibrated map and the vectors of the second calibrated map may have been determined for when a second wavelength (that is different to the first wavelength) is used in the holographic projection of the second target picture.

The method may further comprise applying the second modified map to the second array of two-dimensional coordinates to output a second modified array of two-dimensional coordinates. The method may further comprise distorting the second target picture based on the modified map. The method may further comprise calculating a second hologram of the distorted second target picture.

In a second aspect, there is provided a method of calculating a mapping of a map, the mapping being for distorting at least a portion of a target picture to be projected by a holographic projector and to compensate for changes in the current temperature of the holographic projector. The method comprises the step of receiving a first mapping for transforming a first two-dimensional coordinate to compensate for distortion at a predetermined (first) temperature. The method further comprises the step of receiving a first vector representing a calibrated change of the first two-dimensional coordinate over a predetermined temperature range (e.g. the change in the first two-dimensional coordinate between a second / minimum temperature and a third / maximum temperature). The method further comprises receiving or determining a current (fourth) temperature of the holographic projector. The method further comprises determining a scaling factor based on the difference between the current temperature and the predetermined temperature. The method further comprises calculating a first modified mapping based on / to compensate for the current temperature (by modifying the first mapping). The first modified mapping may form part of a first modified map. The step of calculating the first modified mapping comprises multiplying the first vector by the scaling factor to output a scaled vector. The method further comprises applying the scaled vector to the first mapping. The method may further comprise outputting a modified first mapping for transforming the first two-dimensional coordinate for compensating for distortion of a portion of the target picture when projected by the holographic projector at the current (fourth) temperature.

The method according to the second aspect may be repeated to calculate any number of mapping of a first map. For example, a first map may comprise a plurality of first mappings. Each first mapping may be for transforming a respective two-dimensional coordinate. Each two-dimensional coordinate may form part of an array of two-dimensional coordinates. The method according to the second aspect may be repeated for a plurality of first mappings of the first map. In some embodiments, the method according to the second aspect may be repeated for a sub-set or portion of the first mappings of the first map. In some embodiments, the method according to the second aspect may be repeated for all of the first mappings of the first map. Each time the method is repeated, the method may comprise receiving a further vector. For example, if the method comprises receiving a second mapping (for transforming a second two-dimensional coordinate), the method comprises receiving a second vector (representing a change of the second two-dimensional coordinate).

In a third aspect, there is provided a holographic projector comprising a display device arranged to display a hologram of a picture to spatially modulate light incident thereon in accordance with the hologram, wherein the holographic projector is arranged to form a holographic reconstruction of the picture at a replay plane. The holographic projector further comprises a controller comprising a memory in which is stored a calibrated map and an array of vectors. The calibrated map comprises a plurality of mappings. Each mapping is for transforming a respective two-dimensional coordinate of an array of two-dimensional coordinates to compensate for a distortion at a predetermined temperature, each two-dimensional coordinate corresponding to one or more image points of a target picture. The array of vectors comprises a vector for each two-dimensional coordinate, each vector representing a calibrated change of each respective two-dimensional coordinate over a predetermined temperature range. The controller is further arranged to determine a current temperature of the holographic projector (in particular, a temperature of the light source). For example, the holographic projector may comprise a temperature sensor arranged to measure a temperature of a light source of the holographic projector. The controller may be arranged to receive signals from the temperature sensor. The controller may be further arranged to determine a scaling factor based on the difference between the current temperature and the predetermined temperature. The controller may further be arranged to calculate a modified map based on the current temperature by, for each coordinate of the array of two-dimensional coordinates: multiplying the vector that relates to the respective coordinate of the array of two-dimensional coordinates by the scaling factor to output a scaled vector; and applying the scaled vector to the respective mapping of the calibrated map. The controller may further be arranged to output the modified map.

Features and advantages described in relation to one aspect of the disclosure may be applicable to the other aspects of the disclosure. In particular, features and advantages described in relation to the method of the first aspect may be applicable to the method of the second aspect and the holographic projector of the third aspect.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to $2\pi$) which represents the amount of phase retardation provided by that pixel. For example, a pixel of the spatial light modulator described as having a phase value of $\pi/2$ will retard the phase of received light by $\pi/2$ radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

BRIEF DESCRIPTION OF THE DRAWINGS

Specific embodiments are described by way of example only with reference to the following figures:

Figure 1 is a schematic showing a reflective SLM producing a holographic reconstruction on a screen;
Figure 2A illustrates a first iteration of an example Gerchberg-Saxton type algorithm;
Figure 2B illustrates the second and subsequent iterations of the example Gerchberg-Saxton type algorithm;
Figure 2C illustrates alternative second and subsequent iterations of the example Gerchberg-Saxton type algorithm;
Figure 3 is a schematic of a reflective LCOS SLM;
Figure 4 shows an example HUD in a vehicle;
Figure 5 shows the process of pre-distorting a target picture for holographic projection;
Figure 6A represents a pre-distorted target picture, after a distortion map has been applied to the target picture of Figure 5;
Figure 6B represents a virtual image of a holographic reconstruction of the pre-distorted target picture of Figure 6A;
Figure 7 shows a flow diagram representing a method according to the present disclosure;
Figure 8 schematically illustrates one vector being scaled;

Figure 9 schematically represents the process of pre-distorting a target picture, prior to the calculation of a hologram of the target picture, using a modified distortion map calculated using a method according to present disclosure;

Figure 10 shows a schematic view of a multi-colour holographic projector comprising a plurality of colour channels; and

Figure 11 represents a misalignment of image points in a holographic reconstruction from a first (green) channel and a second (blue) channel.

The same reference numbers will be used throughout the drawings to refer to the same or like parts.

DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

Optical configuration

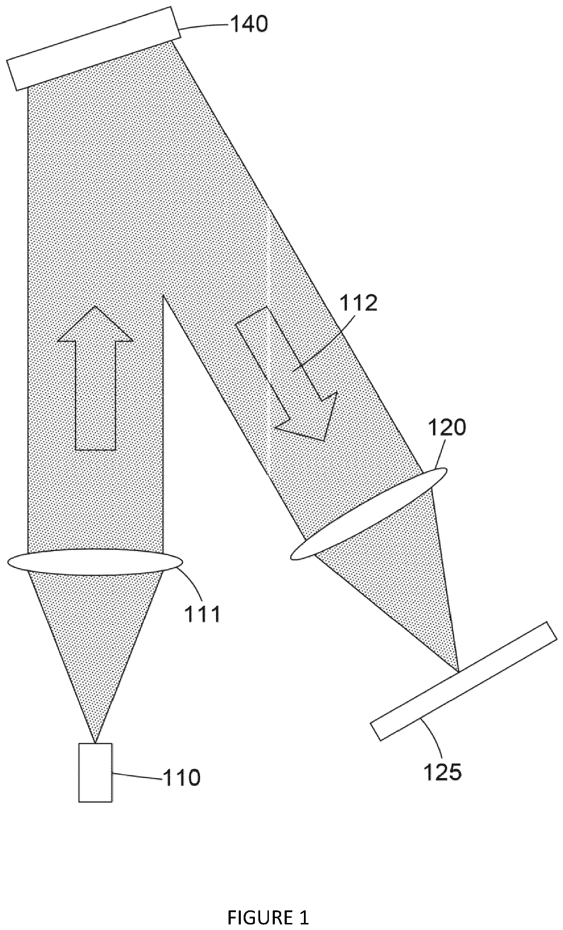

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is not a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms.

A Fourier transform hologram may be calculated using an algorithm such as the Gerchberg-Saxton algorithm. Furthermore, the Gerchberg-Saxton algorithm may be used to calculate a hologram in the Fourier domain (i.e. a Fourier transform hologram) from amplitude-only information in the spatial domain (such as a photograph). The phase information related to the object is effectively "retrieved" from the amplitude-only information in the spatial domain. In some embodiments, a computer-generated hologram is calculated from amplitude-only information using the Gerchberg-Saxton algorithm or a variation thereof.

The Gerchberg Saxton algorithm considers the situation when intensity cross-sections of a light beam, IA(x, y) and IB(x, y), in the planes A and B respectively, are known and IA(x, y) and IB(x, y) are related by a single Fourier transform. With the given intensity cross-sections, an approximation to the phase distribution in the planes A and B, ΨA(x, y) and ΨB(x, y) respectively, is found. The Gerchberg-Saxton algorithm finds solutions to this problem by following an iterative process. More specifically, the Gerchberg-Saxton algorithm iteratively applies spatial and spectral constraints while repeatedly transferring a data set (amplitude and phase), representative of IA(x, y) and IB(x, y), between the spatial domain and the Fourier (spectral or frequency) domain. The corresponding computer-generated hologram in the spectral domain is obtained through at least one iteration of the algorithm. The algorithm is convergent and arranged to produce a hologram representing an input image. The hologram may be an amplitude-only hologram, a phase-only hologram or a fully complex hologram.

In some embodiments, a phase-only hologram is calculated using an algorithm based on the Gerchberg-Saxton algorithm such as described in British patent 2,498,170 or 2,501,112 which are hereby incorporated in their entirety by reference. However, embodiments disclosed herein describe calculating a phase-only hologram by way of example only. In these embodiments, the Gerchberg-Saxton algorithm retrieves the phase information Ψ [u, v] of the Fourier transform of the data set which gives rise to a known amplitude information T[x, y], wherein the amplitude information T[x, y] is representative of a target picture (e.g. a photograph). Since the magnitude and phase are intrinsically combined in the Fourier transform, the transformed magnitude and phase contain useful information about the accuracy of the calculated data set. Thus, the algorithm may be used iteratively with feedback on both the amplitude and the phase information. However, in these embodiments, only the phase information Ψ[u, v] is used as the hologram to form a holographic representative of the target picture at an image plane. The hologram is a data set (e.g. 2D array) of phase values.

In other embodiments, an algorithm based on the Gerchberg-Saxton algorithm is used to calculate a fully-complex hologram. A fully-complex hologram is a hologram having a magnitude component and a phase component. The hologram is a data set (e.g. 2D array) comprising an array of complex data values wherein each complex data value comprises a magnitude component and a phase component.

In some embodiments, the algorithm processes complex data and the Fourier transforms are complex Fourier transforms. Complex data may be considered as comprising (i) a real component and an imaginary component or (ii) a magnitude component and a phase component. In some embodiments, the two components of the complex data are processed differently at various stages of the algorithm.

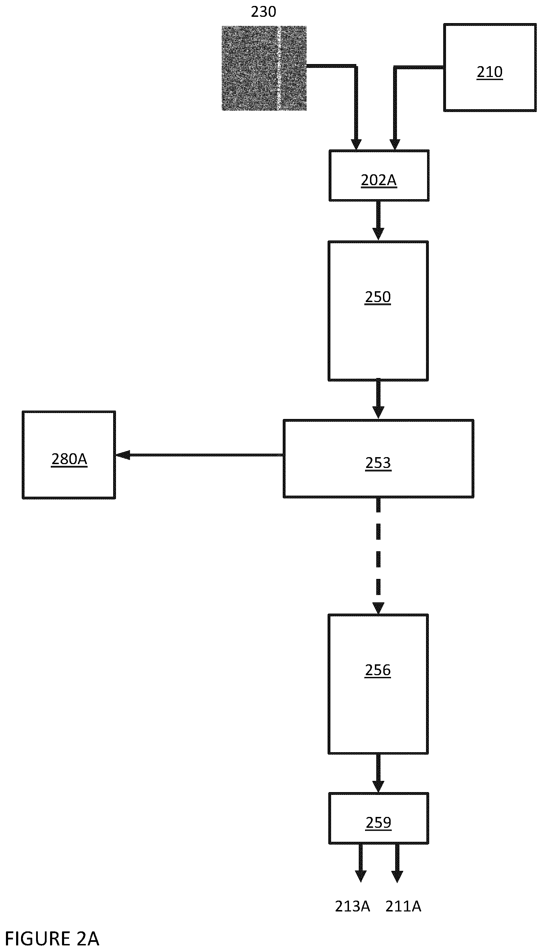

Figure 2A illustrates the first iteration of an algorithm in accordance with some embodiments for calculating a phase-only hologram. The input to the algorithm is an input image 210 comprising a 2D array of pixels or data values, wherein each pixel or data value is a magnitude, or amplitude, value. That is, each pixel or data value of the input image 210 does not have a phase component. The input image 210 may therefore be considered a magnitude-only or amplitude-only or intensity-only distribution. An example of such an input image 210 is a photograph or one frame of video comprising a temporal sequence of frames. The first iteration of the algorithm starts with a data forming step 202A comprising assigning a random phase value to each pixel of the input image, using a random phase distribution (or random phase seed) 230, to form a starting complex data set wherein each data element of the set comprising magnitude and phase. It may be said that the starting complex data set is representative of the input image in the spatial domain.

First processing block 250 receives the starting complex data set and performs a complex Fourier transform to form a Fourier transformed complex data set. Second processing block 253 receives the Fourier transformed complex data set and outputs a hologram 280A. In some embodiments, the hologram 280A is a phase-only hologram. In these embodiments, second processing block 253 quantises each phase value and sets each amplitude value to unity in order to form hologram 280A. Each phase value is quantised in accordance with the phase-levels which may be represented on the pixels of the spatial light modulator which will be used to "display" the phase-only hologram. For example, if each pixel of the spatial light modulator provides 256 different phase levels, each phase value of the hologram is quantised into one phase level of the 256 possible phase levels. Hologram 280A is a phase-only Fourier hologram which is representative of an input image. In other embodiments, the hologram 280A is a fully complex hologram comprising an array of complex data values (each including an amplitude component and a phase component) derived from the received Fourier transformed complex data set. In some embodiments, second processing block 253 constrains each complex data value to one of a plurality of allowable complex modulation levels to form hologram 280A. The step of constraining may include setting each complex data value to the nearest allowable complex modulation level in the complex plane. It may be said that hologram 280A is representative of the input image in the spectral or Fourier or frequency domain. In some embodiments, the algorithm stops at this point.

However, in other embodiments, the algorithm continues as represented by the dotted arrow in Figure 2A. In other words, the steps which follow the dotted arrow in Figure 2A are optional (i.e. not essential to all embodiments).

Third processing block 256 receives the modified complex data set from the second processing block 253 and performs an inverse Fourier transform to form an inverse Fourier transformed complex data set. It may be said that the inverse Fourier transformed complex data set is representative of the input image in the spatial domain.

Fourth processing block 259 receives the inverse Fourier transformed complex data set and extracts the distribution of magnitude values 211A and the distribution of phase values 213A. Optionally, the fourth processing block 259 assesses the distribution of magnitude values 211A. Specifically, the fourth processing block 259 may compare the distribution of magnitude values 211A of the inverse Fourier transformed complex data set with the input image 510 which is itself, of course, a distribution of magnitude values. If the difference between the distribution of magnitude values 211A and the input image 210 is sufficiently small, the fourth processing block 259 may determine that the hologram 280A is acceptable. That is, if the difference between the distribution of magnitude values 211A and the input image 210 is sufficiently small, the fourth processing block 259 may determine that the hologram 280A is a sufficiently-accurate representative of the input image 210. In some embodiments, the distribution of phase values 213A of the inverse Fourier transformed complex data set is ignored for the purpose of the comparison. It will be appreciated that any number of different methods for comparing the distribution of magnitude values 211A and the input image 210 may be employed and the present disclosure is not limited to any particular method. In some embodiments, a mean square difference is calculated and if the mean square difference is less than a threshold value, the hologram 280A is deemed acceptable. If the fourth processing block 259 determines that the hologram 280A is not acceptable, a further iteration of the algorithm may be performed. However, this comparison step is not essential and in other embodiments, the number of iterations of the algorithm performed is predetermined or preset or user-defined.

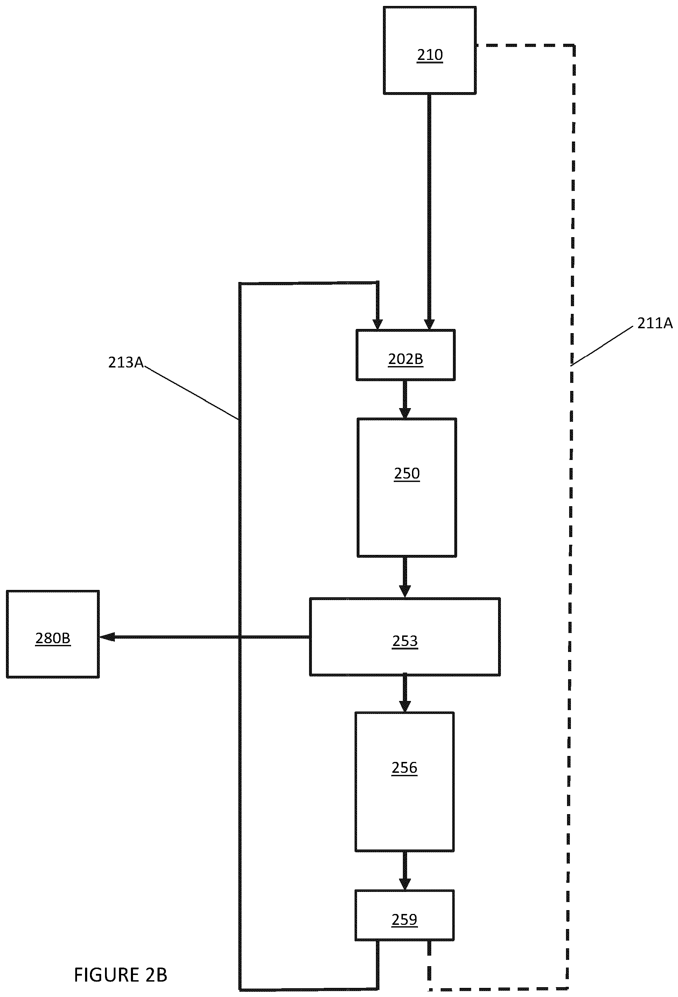

Figure 2B represents a second iteration of the algorithm and any further iterations of the algorithm. The distribution of phase values 213A of the preceding iteration is fed-back through the processing blocks of the algorithm. The distribution of magnitude values 211A is rejected in favour of the distribution of magnitude values of the input image 210. In the first iteration, the data forming step 202A formed the first complex data set by combining distribution of magnitude values of the input image 210 with a random phase distribution 230. However, in the second and subsequent iterations, the data forming step 202B comprises forming a complex data set by combining (i) the distribution of phase values 213A from the previous iteration of the algorithm with (ii) the distribution of magnitude values of the input image 210.

The complex data set formed by the data forming step 202B of Figure 2B is then processed in the same way described with reference to Figure 2A to form second iteration hologram 280B. The explanation of the process is not therefore repeated here. The algorithm may stop when the second iteration hologram 280B has been calculated. However, any number of further iterations of the algorithm may be performed. It will be understood that the third processing block 256 is only required if the fourth processing block 259 is required or a further iteration is required. The output hologram 280B generally gets better with each iteration. However, in practice, a point is usually reached at which no measurable improvement is observed or the positive benefit of performing a further iteration is out-weighted by the negative effect of additional processing time. Hence, the algorithm is described as iterative and convergent.

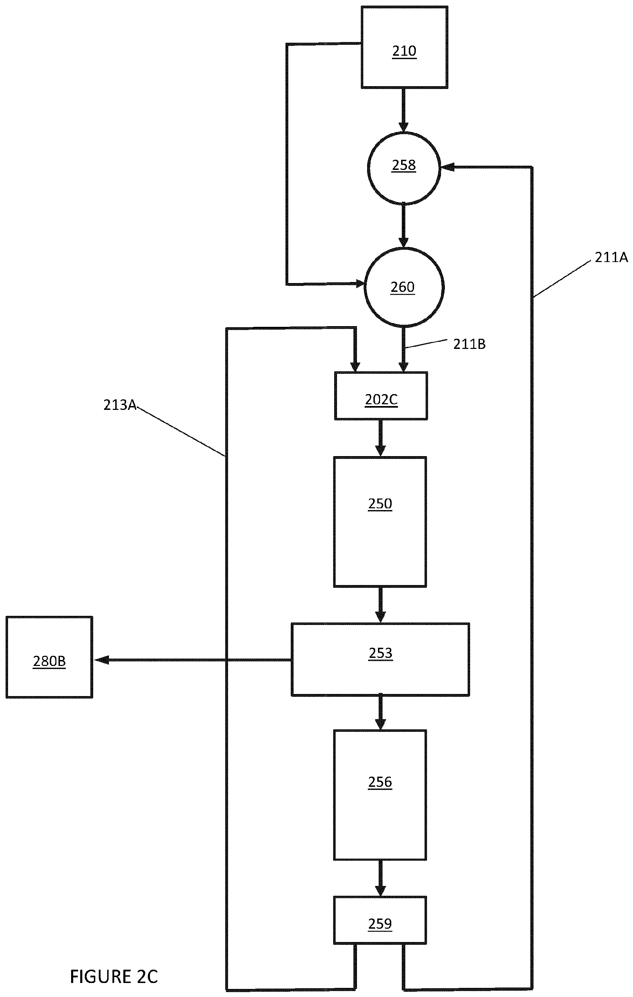

Figure 2C represents an alternative embodiment of the second and subsequent iterations. The distribution of phase values 213A of the preceding iteration is fed-back through the processing blocks of the algorithm. The distribution of magnitude values 211A is rejected in favour of an alternative distribution of magnitude values. In this alternative embodiment, the alternative distribution of magnitude values is derived from the distribution of magnitude values 211 of the previous iteration. Specifically, processing block 258 subtracts the distribution of magnitude values of the input image 210 from the distribution of magnitude values 211 of the previous iteration, scales that difference by a gain factor $\alpha$ and subtracts the scaled difference from the input image 210. This is expressed mathematically by the following equations, wherein the subscript text and numbers indicate the iteration number:

$$R_{n+1}[x,y] = F'\{\exp(i\,\psi_n[u,v])\}$$

$$\psi_n[u,v] = \angle F\{\eta \cdot \exp(i\angle R_n[x,y])\}$$

$$\eta = T[x,y] - \alpha(|R_n[x,y]| - T[x,y])$$

where:

F' is the inverse Fourier transform;
F is the forward Fourier transform;
R[x, y] is the complex data set output by the third processing block 256;

T[x, y] is the input or target picture;

$\angle$ is the phase component;

$\Psi$ is the phase-only hologram 280B;

$\eta$ is the new distribution of magnitude values 211B; and

$\alpha$ is the gain factor.

The gain factor $\alpha$ may be fixed or variable. In some embodiments, the gain factor $\alpha$ is determined based on the size and rate of the incoming target picture data. In some embodiments, the gain factor $\alpha$ is dependent on the iteration number. In some embodiments, the gain factor $\alpha$ is solely function of the iteration number.

The embodiment of Figure 2C is the same as that of Figure 2A and Figure 2B in all other respects. It may be said that the phase-only hologram $\Psi(u, v)$ comprises a phase distribution in the frequency or Fourier domain.

In some embodiments, the Fourier transform is performed using the spatial light modulator. Specifically, the hologram data is combined with second data providing optical power. That is, the data written to the spatial light modulation comprises hologram data representing the object and lens data representative of a lens. When displayed on a spatial light modulator and illuminated with light, the lens data emulates a physical lens - that is, it brings light to a focus in the same way as the corresponding physical optic. The lens data therefore provides optical, or focusing, power. In these embodiments, the physical Fourier transform lens 120 of Figure 1 may be omitted. It is known in the field of computer-generated holography how to calculate data representative of a lens. The data representative of a lens may be referred to as a software lens. For example, a phase-only lens may be formed by calculating the phase delay caused by each point of the lens owing to its refractive index and spatially-variant optical path length. For example, the optical path length at the centre of a convex lens is greater than the optical path length at the edges of the lens. An amplitude-only lens may be formed by a Fresnel zone plate. It is also known in the art of computer-generated holography how to combine data representative of a lens with a hologram so that a Fourier transform of the hologram can be performed without the need for a physical Fourier lens. In some embodiments, lensing data is combined with the hologram by simple addition such as simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may be combined in the same way with grating data - that is, data arranged to perform the function of a grating such as beam steering. Again, it is known in the field of computer-generated holography how to calculate such data. For example, a phase-only grating may be formed by modelling the phase delay caused by each point on the surface of a blazed grating. An amplitude-only grating may be simply superimposed with an amplitude-only hologram to provide angular steering of the holographic reconstruction.

In some embodiments, the Fourier transform is performed jointly by a physical Fourier transform lens and a software lens. That is, some optical power which contributes to the Fourier transform is provided by a software lens and the rest of the optical power which contributes to the Fourier transform is provided by a physical optic or optics.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

Embodiments relate to Fourier holography and Gerchberg-Saxton type algorithms by way of example only. The present disclosure is equally applicable to Fresnel holography and holograms calculated by other techniques such as those based on point cloud methods.

<u>Light modulation</u>

A spatial light modulator may be used to display the diffractive pattern including the computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

In some embodiments, the light-modulating elements (i.e. the pixels) of the spatial light modulator are cells containing liquid crystal. That is, in some embodiments, the spatial light modulator is a liquid crystal device in which the optically-active component is the liquid crystal. Each liquid crystal cell is configured to selectively-provide a plurality of light modulation levels. That is, each liquid crystal cell is configured at any one time to operate at one light modulation level selected from a plurality of possible light modulation levels. Each liquid crystal cell is dynamically-reconfigurable to a different light modulation level from the plurality of light modulation levels. In some embodiments, the spatial light modulator is a reflective liquid crystal on silicon (LCOS) spatial light modulator but the present disclosure is not restricted to this type of spatial light modulator.

A LCOS device provides a dense array of light modulating elements, or pixels, within a small aperture (e.g. a few centimetres in width). The pixels are typically approximately 10 microns or less which results in a diffraction angle of a few degrees meaning that the optical system can be compact. It is easier to adequately illuminate the small aperture of a LCOS SLM than it is the larger aperture of other liquid crystal devices. An LCOS device is typically reflective which means that the circuitry which drives the pixels of a LCOS SLM can be buried under the reflective surface. The results in a higher aperture ratio. In other words, the pixels are closely packed meaning there is very little dead space between the pixels. This is advantageous because it reduces the optical noise in the replay field. A LCOS SLM uses a silicon backplane which has the advantage that the pixels are optically flat. This is particularly important for a phase modulating device.

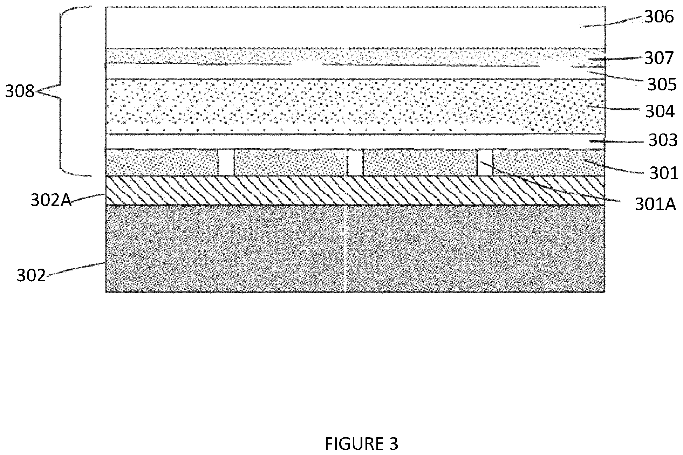

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror.

An alignment layer 303 is disposed on the array of electrodes, and a liquid crystal layer 304 is disposed on the alignment layer 303. A second alignment layer 305 is disposed on the planar transparent layer 306, e.g. of glass. A single transparent electrode 307 e.g. of ITO is disposed between the transparent layer 306 and the second alignment layer 305.

Each of the square electrodes 301 defines, together with the overlying region of the transparent electrode 307 and the intervening liquid crystal material, a controllable phase-modulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images). However, the teachings of the present disclosure may equally be implemented using a transmissive LCOS SLM.

Head-up display

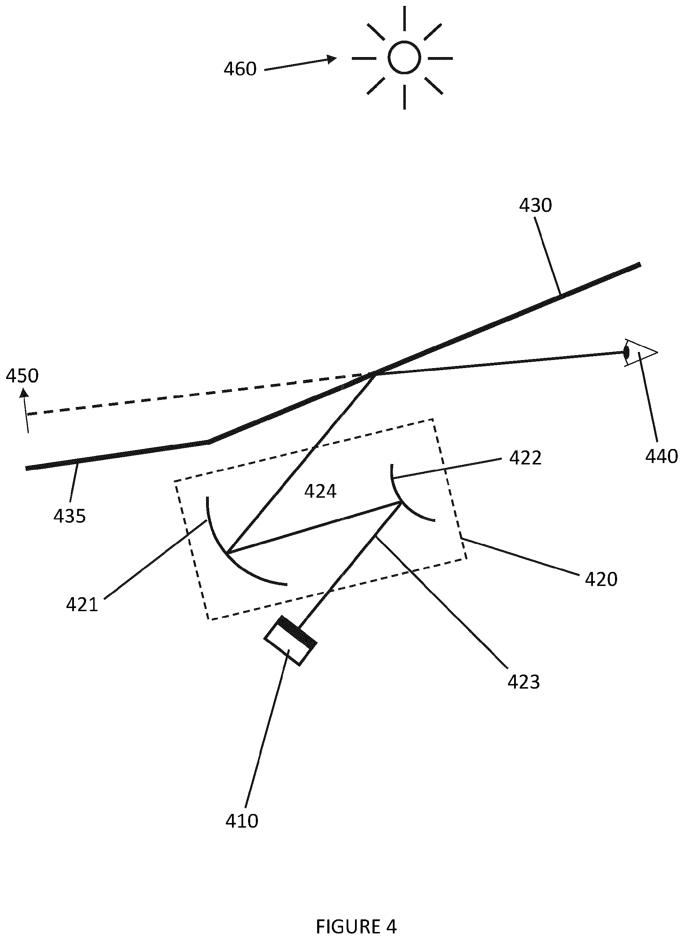

In some embodiments, there is provided a holographic projection system as part of a head-up display (or "HUD"). Figure 4 shows a HUD in a vehicle such as a car. The windscreen 430 and bonnet (or hood) 435 of the vehicle are shown in Figure 4. The HUD comprises a picture generating unit, "PGU", 410 and an optical system 420. The PGU 410 and the optical system 420 may collectively be referred to as a holographic projector.

The PGU 410 comprises a light source, a light receiving surface and a processor (or computer) arranged to computer-control the image content of the picture. The PGU 410 is arranged to generate a picture, or sequence of pictures, on the light receiving surface. The light receiving surface may be a screen or diffuser. In some embodiments, the light receiving surface is plastic (that is, made of plastic). The light receiving surface is disposed on the primary replay plane. That is, the holographic replay plane on which the images are first formed.

The optical system 420 comprises an input port, an output port, a first mirror 421 and a second mirror 422. The first mirror 421 and second mirror 422 are arranged to guide light from the input port of the optical system to the output port of the optical system. More specifically, the second mirror 442 is arranged to receive light of the picture from the PGU 410 and the first mirror 421 is arranged to receive light of the picture from the second mirror 422. The first mirror 421 is further arranged to reflect the received light of the picture to the output port. The optical path from the input port to the output port therefore comprises a first optical path 423 (or first optical path component) from the input to the second mirror 422 and a second optical path 424 (or second optical path component) from the second mirror 422 to the first mirror 421. There is, of course, a third optical path (or optical path component) from the first mirror to the output port but that is not assigned a reference numeral in Figure 4. The optical configuration shown in Figure 4 may be referred to as a "z-fold" configuration owing to the shape of the optical path.

The HUD is configured and positioned within the vehicle such that light of the picture from the output port of the optical system 420 is incident upon the windscreen 430 and at least partially reflected by the windscreen 430 to the user 440 of the HUD. Accordingly, in some embodiments, the optical system is arranged to form the virtual image of each picture in the windscreen by reflecting spatially-modulated light off the windscreen. The user 440 of the HUD (for example, the driver of the car) sees a virtual image 450 of the picture in the windscreen 430. Accordingly, in embodiments, the optical system is arranged to form a virtual image of each picture on a windscreen of the vehicle. The virtual image 450 is formed a distance down the bonnet 435 of the car. For example, the virtual image may be 1 to 2.5 metres from the user 440. The output port of the optical system 420 is aligned with an aperture in the dashboard of the car such that light of the picture is directed by the optical system 420 and windscreen 430 to the user 440. In this configuration, the windscreen 430 functions as an optical combiner. In some embodiments, the optical system is arranged to form a virtual image of each picture on an additional optical combiner which is included in the system. The windscreen 430, or additional optical combiner if included, combines light from the real world scene with light of the picture. It may therefore be understood that the HUD may provide augmented reality including a virtual image of the picture. For example, the augmented reality information may include navigation information or information related to the speed of the automotive vehicle. In some embodiments, the light forming the picture is output by incident upon the windscreen at Brewster's angle (also known as the polarising angle) or within 5 degrees of Brewster's angle such as within 2 degrees of Brewster's angle.

In some embodiments, the first mirror and second mirror are arranged to fold the optical path from the input to the output in order to increase the optical path length without overly increasing the physical size of the HUD.

The picture formed on the light receiving surface of the PGU 410 may only be a few centimetres in width and height. The light receiving surface of the PGU 410 may be the display plane of the alignment method. The first mirror 421 and second mirror 422, collectively or individually, provide magnification. That is, the first mirror and/or second mirror may have optical power (that is, dioptric or focusing power). The user 440 therefore sees a magnified virtual image 450 of the picture formed by the PGU. The first mirror 421 and second mirror 422 may also correct for optical distortions such as those caused by the windscreen 430 which typically has a complex curved shape. The folded optical path and optical power in the mirrors together allow for suitable magnification of the virtual image of the picture.

The PGU 410 of the present disclosure comprises a holographic projector and a light receiving surface such as a screen or diffuser.

Distortion correction

In accordance with the disclosure above, the holographic projector comprises a light source, a spatial light modulator and a hologram processor. The spatial light modulator is arranged to spatially-modulate light in accordance with one or more (typically a sequence of) holograms represented on the spatial light modulator. The hologram processor is arranged to provide the computer-generated holograms. In some embodiments, the hologram processor calculates and outputs the computer-generated holograms in real-time. In some embodiments, each picture formed by the PGU 410 is a holographic reconstruction on the light receiving surface. That is, in some embodiments, each picture is formed by interference of the spatially-modulated light at the light receiving surface.

Each hologram represented (or displayed) on the spatial modulator may be a hologram of a target picture. The holographic reconstruction is a holographic reconstruction of the picture. The virtual image 450 is a virtual image of the holographic reconstruction. The virtual image of the holographic reconstruction may be distorted relative to target picture encoded by the hologram. In other words, image points or pixels of the virtual image of the holographic reconstruction may have a different spatial distribution relative to target picture. In particular, the spacing between adjacent pixels in the virtual image of the holographic reconstruction may be different to the spacing between respective adjacent pixels in the target picture. In other words, the pixels of the virtual image of the holographic reconstruction may have been shifted with respect to one another relative to the respective pixels of the target picture. The distortion will typically be non-uniform across the virtual image of the holographic reconstruction. In other words, the distortion does not merely result in uniform magnification of the holographic reconstruction relative to the target but actually skews / warps the picture. There are several causes of this distortion. The present disclosure relates in particular to compensating for distortions related to the current or a changing temperature of the holographic projector. For example, optical components of the holographic projector will typically expand or contract in response to temperature changes. This may cause optical misalignments. Furthermore, changes in temperature of the holographic projector (and, in particular, of the light source of the holographic projector) typically results in changes in the wavelength of the light emitted by the light source (which, in this example, is a coherent light source such as a laser). As the skilled person will appreciate, the position of pixels of the holographic reconstruction will shift in response to changes in the wavelength of the light emitted by the light source.

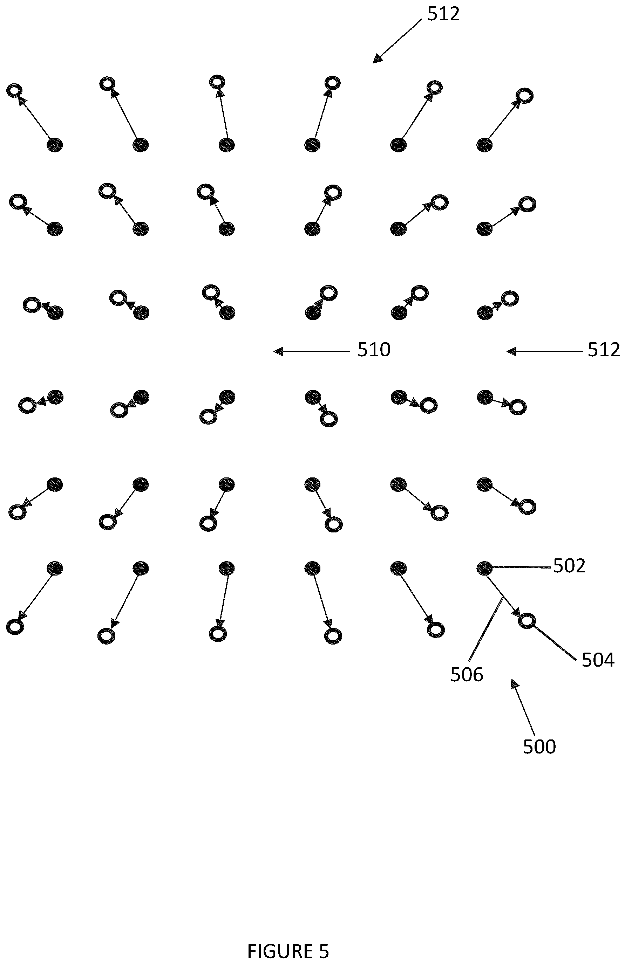

If the amount of distortion of each pixel (at a particular temperature and wavelength of light) is known, it is possible to compensate for distortion in the virtual image 450 by pre-distorting the target picture in an opposing manner to the distortions caused by, for example, optical misalignments in the holographic projector at the specific temperature. In this way, when a hologram of the pre-distorted target picture is calculated / (computer-)generated and displayed, a holographic reconstruction of the target picture will appear as intended. This pre-distortion is represented schematically in Figure 5.

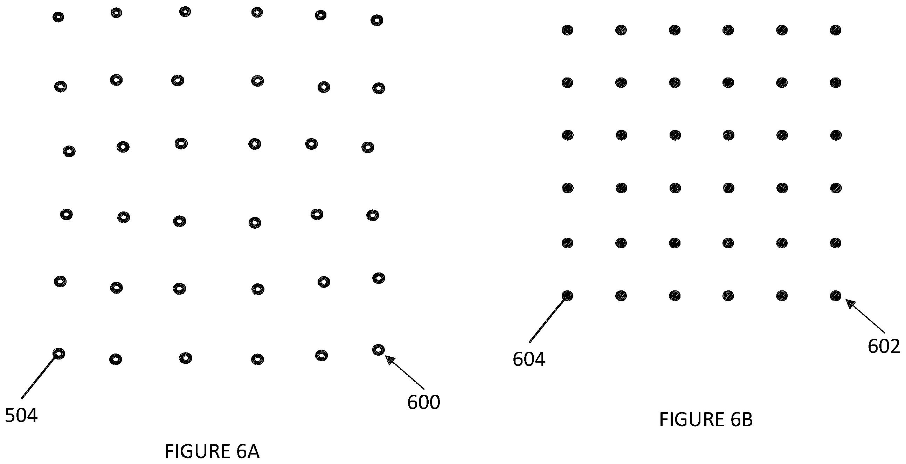

Figure 5 shows the process of pre-distorting a target picture 500, prior to the calculation of a hologram of the target picture 500. In the representative example of Figure 5, the intention is for a user of the holographic projector to receive a virtual image of an uniform array of dots 502. The array of dots 502 comprises solid black dots 502 in Figure 5. The spacing between the dots 502 is uniform across the array. The array in the example of Figure 5 comprises six dots by six dots. If a hologram were calculated of the uniform array of dots 502 and displayed on the spatial light modulator, the subsequent virtual image 450 projected by the projector would be distorted as a result of the effects described above. Thus, the virtual image 450 (received by a user of the projector) would appear as a non-uniform array. The target picture 500 can be pre-distorted using a predetermined distortion map. The predetermined distortion comprises a mapping for each pixel of the target picture. Each mapping acts as a transform. In particular, each mapping transforms a two-dimensional coordinate associated with one or more pixels of the target picture to a new (pre-distorted) position. Each mapping compensates for the distortion experienced by the respective pixel(s) of the target picture in the virtual image 450. The transform / (pre-) distortion of the target picture 500 is represented in Figure 5 by the hollow dots 504. In particular, there is a hollow dot 504 for each solid black dot 502. The transform in position of each dot 504 is represented by an arrow 506 from the solid black dot 502 to the respective hollow dot 504. The amount of pre-distortion / the amount that each solid dot 502 is shifted represented by the length of the arrows 506 in Figure 5. The length of the arrows 506 in Figure 5 is non-uniform across the target picture 500, thus the amount of pre-distortion is non-uniform across the target picture 500. For example, the amount of pre-distortion required is smallest at a centre 510 of the target picture and increases for solid dots 502 closer to the edges 512 of the target picture. Furthermore, the direction of the pre-distortion is non-uniform across the target picture 500. In particular, the direction of the pre-distortion is generally substantially parallel to a direction defined from the centre 510 of the target picture through the respective solid dot 502. As such, solid dots 502 on opposing sides of the centre 510 are pre-distorted in opposing directions to one another in the example of Figure 5. Once the target picture 500 has been pre-distorted, a hologram of the pre-distorted target picture is calculated, displayed on the spatial light modulator and projector to form a holographic reconstruction. This is represented in Figure 6.

Figure 6A represents a pre-distorted target picture 600, after the predetermined distortion map has been applied to the target picture 500. Figure 6B represents a virtual image 602 of a holographic reconstruction of the pre-distorted target picture 600. The virtual image 602 appears as a uniform array of solid black dots 604. As described above, this is the picture that was intended to be projected by the holographic projector. Thus, the pre-distortion of the target picture 500 has successfully compensated for certain distortions caused by the holographic projector.

The target picture in Figure 5 is an array of black dots 502 merely as a convenient example, to represent the process of pre-distorting a target picture to compensate for distortions caused by the holographic project / current environmental conditions. It should be clear to the skilled reader that pre-distortion can be applied to any target picture (for example, a target picture comprising a non-uniform distribution of pixels).

Real-time distortion map calculation

The distortion correction described in relation to Figures 5 and 6, above, requires a pre-determined distortion map. Typically, significant experimentation and simulation work is required to properly characterise a holographic projector to arrive at a pre-determined distortion map that satisfactorily pre-distorts a target picture. Even so, the pre-determined distortion map will only be accurate for compensating for distortions at a particular temperature and / or wavelength of light. So, the pre-distortion of the target picture 500 shown in Figures 5 and 6 would only accurately compensate for distortions if the holographic projector is at the temperature and / or uses the wavelength that pre-determined distortion was specifically determined for. However, holographic projectors typically must be able to operate and provide good quality (non-distorted) holographic reconstructions over a range of temperatures. For holographic projectors in vehicles, the required operation temperature range will typically be relatively large, for example at least 100 degrees Celsius. Clearly, a single pre-determined distortion map will not be suitable for use over such a large temperature range. However, the inventors have recognised that characterising a large number of pre-determined distortion maps (for different temperatures and / or wavelengths) is not a practical. This is because a) doing so would require a very large amount of validation work and b) the memory requirements would be very high. Instead, the inventors have developed a fast and computationally efficient method of calculating a distortion map for a current temperature. This method can be performed in real-time, on the fly. This means there is no need to characterise the holographic projectors at a large number of temperatures and store the respective maps in a large memory / cumbersome look-up table. Instead, the method may take as an input a single (validated) pre-determined map and scale / modify that single map for the current temperature. The inventors have developed this method following their finding, after thorough simulation and experimentation, that there is predictable (linear) relationship between current temperature and the amount of pre-distortion needed to compensate for certain distortions.

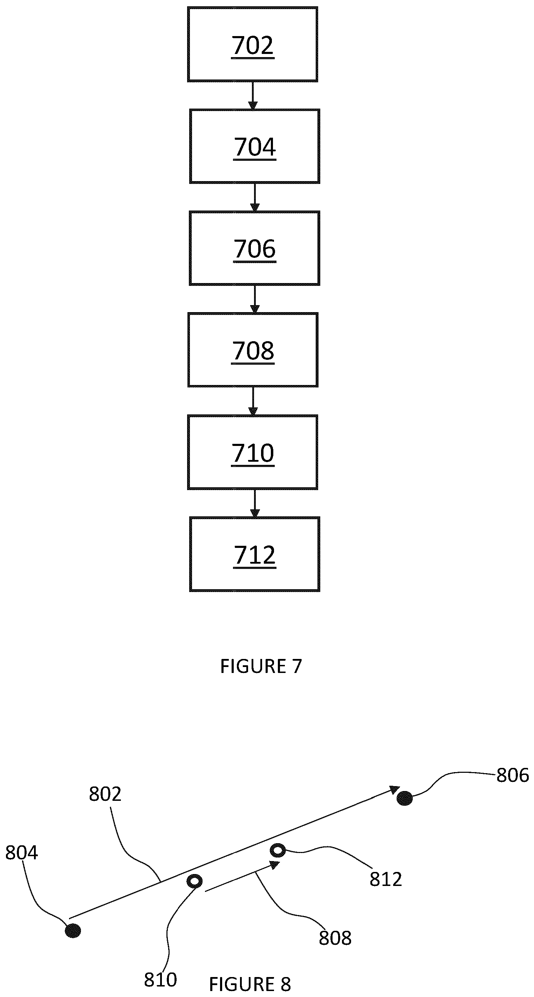

Figure 7 shows a flow diagram representing a method according to the present disclosure.

Step 702 of the method comprises receiving an array of two-dimensional coordinates. In some examples, each two-dimensional coordinate represents or corresponds to one or pixels of a target picture, such as target picture 500, without the pre-distortion having been applied. The method according to the disclosure calculates a distortion map that is suitable for transforming each two-dimensional coordinate of the array to compensate for distortions at a current temperature of the holographic projector. The transformed positions of each two-dimensional coordinate are used to pre-distort a target picture. In some examples, there is a one to one relationship between the number of two-dimensional coordinates in the array and the number of pixels in the target picture. In other words, each two-dimensional coordinate may be considered to represent (or even be) one of the pixels of the target picture. In such examples, the transformed array of two-dimensional coordinates can be used to directly pre-distort / shift each respective pixel of the target picture. In some other examples, there is a one to many relationship between the number of two-dimensional coordinates in the array and the number of pixels in the target picture. In other words, each two-dimensional coordinate may be considered to represent or correspond to more than one pixel of the target pixel. In such examples, the calculation of the distortion map may be more efficient because the distortion map comprises fewer transform / mappings (each of which need to be calculated). However, in such examples, the transformed array of two-dimensional coordinates cannot be used to directly pre-distort / shift each respective pixel of the target picture. Instead, an interpolation step is required to determine how the position of each transformed two-dimensional coordinate should be used to pre-distort / shift each pixel of the target picture. Suitable interpolation methods will be familiar to the skilled reader.

Step 704 of the method comprises receiving a single calibrated distortion map $M_0$. The single calibrated distortion map comprises a plurality of mappings. Each mapping is for transforming one of the two-dimensional coordinates in the received array of two-dimensional coordinates. The mappings of the single calibrated distortion map are mappings that have been determined and validated by previous experimentation and / simulation. In some examples, the step of determining / validating these mappings does not form part of the method according to the present disclosure. The mappings of the single calibrated distortion map are mappings that have been determined by experiment and / or simulation to compensate for distortion of a target picture at a single, first, predetermined temperature $T_0$.

Step 706 of the method comprises receiving an array of vectors C. The array of vectors C comprises a vector for each two-dimensional coordinate of the array of two-dimensional coordinates. Each vector in the array of vectors C represents a calibrated change of each respective two-dimensional coordinate over a predetermined temperature range. In this example, each vector has been determined by simulating how the respective two-dimensional coordinate would need to be transformed to calibrate / pre-distort the coordinate at a minimum temperature of the predetermined temperature range and at a maximum temperature of the predetermined temperature range. The vector represents the change in the two-dimensional coordinate between those two extreme temperature ranges. In one example, determining the array of vectors comprises taking the single calibrated distortion map as input and simulating how that distortion map would change with changing temperature. In particular, it may have been simulated how the distortion map would change at the minimum temperature and at the maximum temperature. The inventors have found that, in examples, the changes in the mappings of the distortion map with temperature is linear. The simulation of the distortion map at the minimum and maximum temperatures relies on this linear relationship, in embodiments. To be clear, the method does not, in most examples, comprise the step of determining the vectors (i.e. the magnitude and / or direction of the vectors) in the array of vectors. Instead, the method simply comprises receiving an array of vectors that has been separately or previously determined. However, a description of how the vectors could have been determined has been included above for completeness.

Step 708 of the method comprises determining a current temperature $T$ of the holographic projector. In this example, step 708 of the method comprises measuring a temperature of the holographic projector (in some examples a temperature of a light source of the holographic projector), using a temperature sensor. In other examples, step 708 of the method comprises measuring or determining a wavelength of the light emitted by the light source of the holographic projector and inferring the temperature of the light source based on the measured or determined wavelength, in a way that will be familiar to the skilled reader.

Step 710 of the method comprises determining a scaling factor using the measured or determined current temperature. In one example, the step of determining the scaling factor comprises determining a difference between the current temperature and the first predetermined temperature (associated with the calibrated distortion map). This difference is then divided by the predetermined temperature range (associated with the array of vectors). The scale factor therefore represents the change in current (measured or determined) temperature from the first predetermined temperature (associated with the calibrated distortion map) as a proportion of the predetermined temperature range (that is associated with the array of vectors).

Step 712 of the method comprises calculating a modified map based on the current temperature by, for each coordinate of the array of two-dimensional coordinates: multiplying the vector that relates to the respective two dimensional coordinate of the array of two-dimensional coordinates by the scaling factor to output a scaled vector; and applying (e.g. adding or subtracting) the scaled vector to the respective mapping of the calibrated map to output a modified mapping for transforming the respective two-dimensional coordinate for compensating for distortion of the target picture when projected by the holographic projector at the current temperature.

Step 714 of the method comprises outputting the modified map comprising an array of the modified mappings determined in step 712.

The method represented in Figure 7 is suitable for being performed in real time / on the fly. In particular, the method represented in Figure 7 may be performed while the holographic projector is in operation. The method of Figure 7 may be followed by the step of pre-distorting a target picture using the mapping determined in the method of Figure 7. This may then be followed by calculating a hologram of the pre-distorted target picture. This may then be followed by displaying the hologram of the pre-distorted target picture and then forming a holographic reconstruction of the target picture. This whole process may then be repeated for a second (different) target picture.

In one example, the method of according to the present disclosure can be represented by the following equation:

$$M(x, y, T) = M_0(x, y) + \frac{T - T_0}{T_{max} - T_{min}} \times C(x, y)$$

In the equation, $M(x, y, T)$ is the modified distortion map. x, y denotes a respective two-dimensional coordinate of the array of two-dimensional coordinates (received at step 702 of the method). T is the current temperature (determined in step 708 of the method). $M_0$ is the calibrated distortion map (received at step 704 of the method) comprising a plurality of mappings at the first predetermined temperature $T_0$. $M_0$ receives as input the respective current two-dimensional coordinate being operated on and transforms that two-dimensional coordinate according to the appropriate mapping. $C(x,y)$ is the array of vectors (received at step 706 of the method) and receives as input the respective current two-dimensional coordinate being operated on and outputs the vector for that two-dimensional coordinate.

The remaining term in the equation ( $\frac{T - T_0}{T_{max} - T_{min}}$ ) is the scaling factor (determined in step 710 of the equation). $T_{min}$ and $T_{max}$ are the minimum and maximum temperatures, respectively, of the predetermined temperature range that the vectors of $C(x,y)$ relate to. The scaling factor is effectively a percentage, representing the change in current temperature $T$ from the first temperature $T_0$ as a proportion of the predetermined temperature range $T_{max}$ - $T_{min}$. Each vector in the array of vectors $C(x, y)$ is multiplied by the scaling factor to output a scaled vector array comprising a plurality of scaled vectors.

Figure 8 schematically illustrates one vector (of the array of vectors $C(x,y)$) being scaled based on the current temperature $T$ and the first predetermined temperature $T_0$. In Figure 8, the vector is represented by arrow 802. Figure 8 also comprises two solid black circles 804, 806. These black circles are at the position of the respective two-dimensional coordinate at the two extremes of the predetermined temperature range. In particular, the position of black circle 804 has been simulated at Tmin and the position of black circle 806 has been simulated at Tmax. The vector 802 represents the magnitude and direction in the change in position from Tmin to Tmax. In other words, the vector 802 represents how the respective two-dimensional coordinate would change (when properly calibrated to compensate for temperature distortions) across the operable temperature range of the holographic projector. Arrow 808 represents the vector 802 after it has been scaled by multiplying the vector by $\frac{T - T_0}{T_{max} - T_{min}}$. The length of the scaled vector 808 (i.e. the magnitude of the vector) is less than the length of the vector 802, but the direction is substantially the same. As above, the scaled vector is applied to the transformed two dimensional coordinate. Hollow black circle 810 is at the position of the respective two-dimensional coordinate after a respective mapping of the calibrated distortion map $M_0$ has been applied. Hollow black circle 812 is at the position of the respective two-dimensional coordinate after the scaled vector 808 has been applied. The model relies on the fact that the vectors can be scaled linearly based on the current temperature. The inventors have found, after thorough simulation and experimentation, that a linear model is appropriate for modelling this relationship and outputs good results (such that when the scaled vector is applied to the mappings of the calibrated distortion map $M_0$, distortion correction is good).

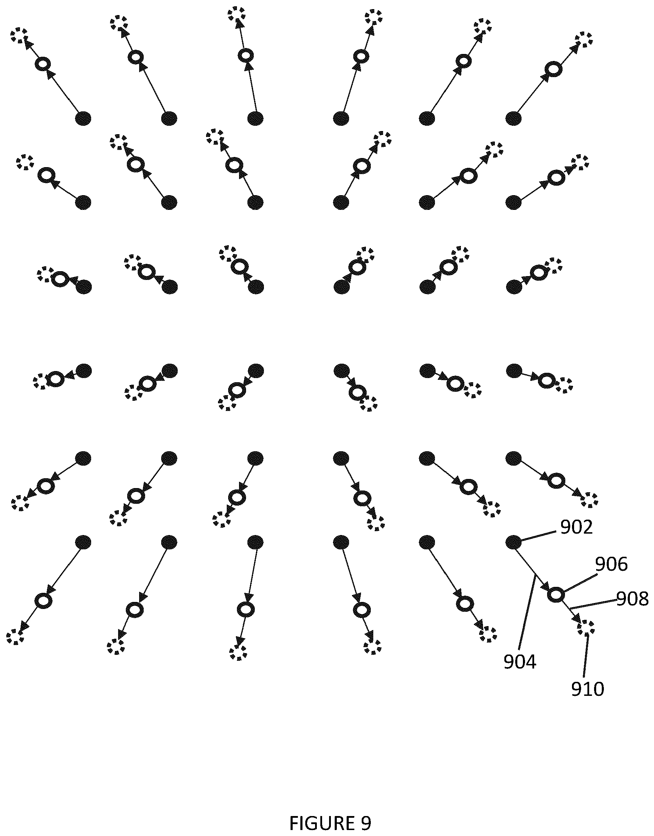

Figure 9 schematically represents the process of pre-distorting a target picture 900, prior to the calculation of a hologram of the target picture, using the modified distortion map M (which is calculated in real-time). In Figure 9, like in Figure 5, the intention is for the user of the holographic projector to receive a virtual image of a uniform array of dots 902. The array of dots 902 comprises solid black dots 902 in Figure 9. The spacing between the dots 902 is uniform across the array. The array in the example of Figure 9 comprises six dots by six dots. Turning to the equation above, the calculation of the modified distortion map effectively comprises two terms. A first term corresponds to the calibrated distortion map $M_0$. A second term corresponds to a scaled array of vectors. Figure 9 represents both terms as separate distortions. In particular, in Figure 9, each dot 902 is first distorted using the calibrated distortion map $M_0$ and then adjusted using the scaled vector. The component of the pre-distortion of each solid dot 902 as a result of the calibrated distortion map $M_0$ is represented by arrows 904 and hollow dots 906. The component of the pre-distortion of each hollow dot 906 as a result of the scaled vector is represented by arrows 908 and broken hollow dots 910. The two different components are shown as separate transforms / distortions in Figure 9 for illustrative purposes only. In reality, when the modified map M is used to transform / pre-distort the target picture, each solid dot 902 would be shifted directly to the respective positions shown by represented by broken hollow dots 910.

## Single colour channels

The method according to present disclosure may have particular application in multi-colour holographic projectors because of the need to ensure that pixels / image features in the holographic reconstructions of different colours are aligned. An example of such a holographic projector is described herein.

Examples of the present disclosure relates to a holographic projector comprising a plurality of single colour channels. Each single colour channel comprises a single colour holographic projector forming a single colour holographic reconstruction (i.e. image or picture). A plurality of single colour pictures is formed on a common replay plane. A full colour picture may be formed using coincident red, green and blue pictures.

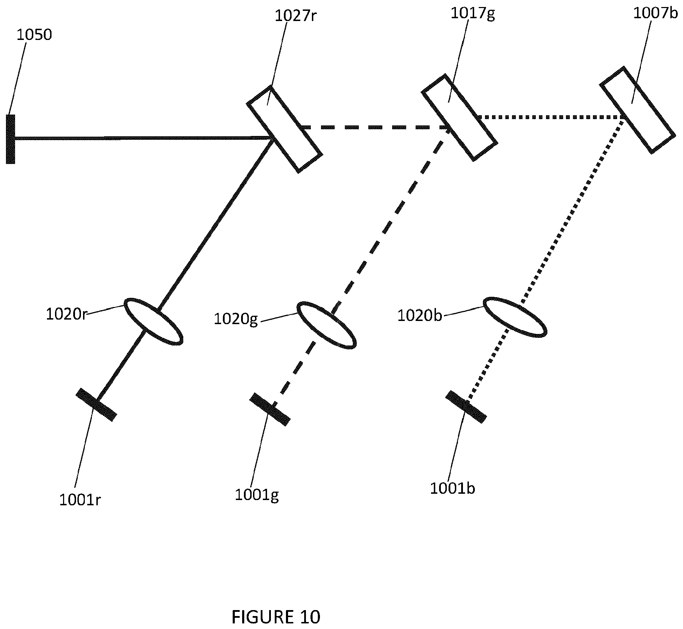

Figure 10 shows red, green and blue colour channels. The red channel comprises a first spatial light modulator 1001r, a first lens 1020r and a first mirror 1027r. The green channel comprises a second spatial light modulator 1001g, a second lens 1020g and a second mirror 1017g. The blue channel comprises a third spatial light modulator 1001b, a third lens 1020b and a third mirror 1007b. Each single colour channel forms a single colour holographic reconstruction (or picture) on replay plane 1050. The first lens 1020r, second lens 1020g and third lens 1020b are optional. If each displayed hologram is a Fourier hologram, the first lens 1020r, second lens 1020g and third lens 1020b may contribute to the Fourier transform of each respective hologram.

The first spatial light modulator 1001r displays a hologram corresponding to a red image. The first spatial light modulator 1001r is illuminated with red light. The first lens 1020r receive spatially modulated light from the first spatial light modulator 1001r and forms a red image on the replay plane 1050. The first mirror 1027r is disposed between the first lens 1020r and replay plane 1050.

The second spatial light modulator 1001g displays a hologram corresponding to a green image. The second spatial light modulator 1001g is illuminated with green light. The second lens 1020g receive spatially modulated light from the second spatial light modulator 1001g and forms a green image on the replay plane 1050. The second mirror 1017g is disposed between the second lens 1020g and replay plane 1050.

The third spatial light modulator 1001b displays a hologram corresponding to a blue image. The third spatial light modulator 1001b is illuminated with blue light. The third lens 1020b receive spatially modulated light from the third spatial light modulator 1001b and forms a blue image on the replay plane 1050. The third mirror 1007b is disposed between the third lens 1020b and replay plane 1050.

The first mirror 1027r is a first dichroic mirror arranged to reflect red light and transmit green and blue light. The second mirror 1017g is a second dichroic mirror arranged to reflect green light and transmit blue light. The third mirror 1007b is reflective to blue light.

Each single colour light path comprises a first part from spatial light modulator to mirror and second part from mirror to replay plane. In embodiments, the first parts of the single channels are spatially-offset but substantially parallel. In embodiments, the second parts of the single channels are substantially colinear.

The red light path from the first spatial light modulator 1001r to replay plane 1050 comprises a reflection off the first mirror 1027r. The green light path from second spatial light modulator 1001g to replay plane 1050 comprises a reflection off second mirror 1017g followed by a transmission through the first mirror 1027r. The blue light path from third spatial light modulator 1001b to replay plane comprises a refection off third mirror 1007b followed by a transmission through the second mirror 1017g and then a transmission through the first mirror 1027r. The replay plane 1050, first mirror 1027r, second mirror 1017g and third mirror 1007b are substantially colinear. The blue path length is greater than the green path length which is greater than the red path length. Specifically, in embodiments, the second part of the blue light path is longer than that of the green light path which is, in turn, longer than that of the red light path. In these embodiments, the first parts may be substantially equal in length.

Each single colour channel may be used to form a holographic reconstruction within a replay field area. The red replay field may contain the red picture content of a picture. The green replay field may contain the green picture content of the picture. The blue replay field may contain the blue picture content of the image. The person skilled in the art will be familiar with the idea of forming a picture by superimposing red, green and blue picture content using red, green and blue colour channels. The alignment of the red, green and blue replay fields is crucial to image quality.

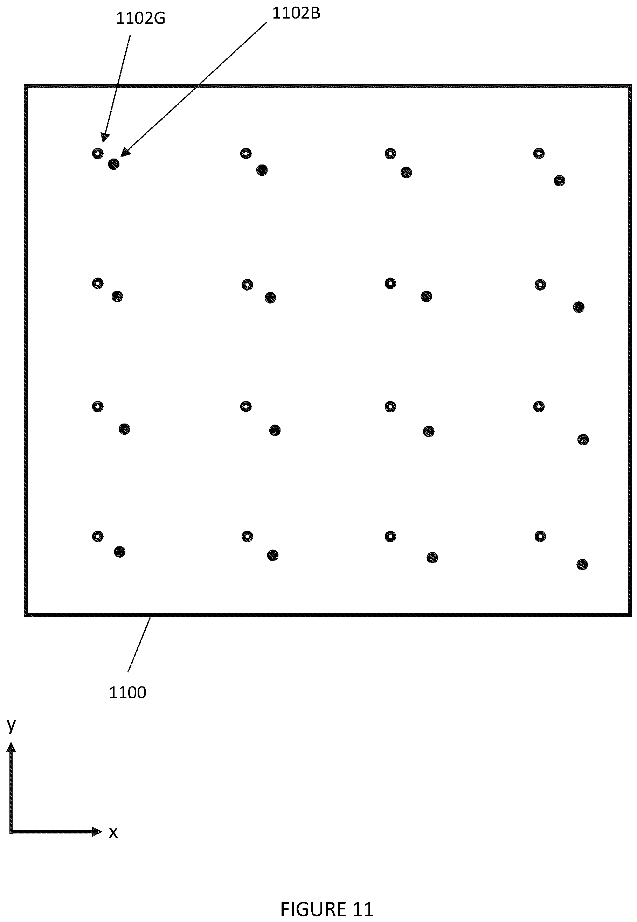

As described above, a holographic reconstruction may be distorted relative to a target picture encoded in the respective hologram displayed on the spatial light modulator. This can result in the pixels / light spots of the holographic reconstruction having a different spatial distribution relative to the respective spatial distribution in the target picture. It has already been described how a distortion map can be calculated in real time to pre-distort the target picture to compensate for this distortion. However, there is another problem in multi-colour holographic projectors which is that the amount of distortion / shift of corresponding image spots / pixels in the holographic reconstruction associated with different channels will typically be different. The skilled person will recognise that this is because a) the wavelength of the light in the different colour channels is different, and b) misalignments of the different channels (for example, due to manufacturing tolerances) may be different. This may result in misalignment in corresponding pixels of different light channels which adversely affects image quality. This misalignment is shown in Figure 11.

Figure 11 shows a first array of green light spots 1102G formed by a first (green) holographic channel (represented by hollow dots in Figure 11) and a second array of blue light spots 1102B formed by a second (blue) holographic channel (represented by solid dots in Figure 11). The light spots of the first holographic channel are misaligned with respect to the light spots of the second holographic channel.

As described previously, the distortion can be corrected by pre-distorting the target picture(s). However, as the skilled reader will appreciate, because the amount of distortion of the different colour channels is different, it is not possible to use the same distortion map for the red content, the green content and the blue content. In other words, the modified map M calculated in the above method may be suitable for correcting for distortions in only one channel. But if the same modified map were applied to the other channels, this would not result in the different colour points / pixels being aligned. Thus, in multicolour holographic projectors, the method described above may be repeated for each colour channel to determine a modified for each colour channel. There may be a different calibrated distortion map for each colour channel and a different array of vectors for each colour channel.

Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims.

**Claims**

1. A method of calculating a map in real-time, the map being for distorting a target picture to be projected by a holographic projector and to compensate for changes in the current temperature of the holographic projector, the method comprising the steps of:

   receiving a calibrated map comprising a plurality of mappings, each mapping for transforming a respective two-dimensional coordinate of an array of two-dimensional coordinates to compensate for distortion at a predetermined temperature, each two-dimensional coordinate corresponding to one or more image points of a target picture;
   receiving an array of vectors comprising a vector for each two-dimensional coordinate, each vector representing a calibrated change of each respective two-dimensional coordinate over a predetermined temperature range;
   receiving a current temperature of the holographic projector;
   determining a scaling factor based on the difference between the current temperature and the predetermined temperature;
   calculating a modified map based on the current temperature by, for each coordinate of the array of two-dimensional coordinates:

      multiplying the vector that relates to the respective coordinate of the array of two-dimensional coordinates by the scaling factor to output a scaled vector; and
      applying the scaled vector to the respective mapping of the calibrated map;

   outputting the modified map.

2. A method as claimed in claim 1, wherein the scaling factor has a linear dependence on temperature.

3. A method as claimed in claim 2, wherein the step of determining the scaling factor comprises determining the difference between the current temperature and the predetermined temperature and dividing that difference by the predetermined temperature range.

4. A method as claimed in any one of the preceding claims, wherein the scaling factor is equal to (T - T0) / (Tmax - Tmin); wherein T is the current temperature, T0 is the predetermined temperature, Tmax is a maximum temperature of the predetermined temperature range and Tmin is a minimum temperature of the predetermined temperature range.

5. A method as claimed in any one of the preceding claims, further comprising the step of receiving the array of two-dimensional coordinates.

6. A method as claimed in any one of the preceding claims, further comprising the step of applying the modified map to the array of two-dimensional coordinates to output a modified array of two-dimensional coordinates.

7. A method as claimed in claim 6, further comprising:

receiving a target picture comprising a plurality of image points, wherein each two-dimensional coordinate of the array of two-dimensional coordinates corresponds to one or more image points of the target picture; and
pre-distorting the target picture based on the modified array of two-dimensional coordinates.

8. A method as claimed in claim 7, further comprising calculating a hologram of the pre-distorted target picture.

9. A method claimed in any one of the preceding claims, wherein the target picture is a first target picture, the array of two-dimensional coordinates is a first array of two-dimensional coordinates, the calibrated map is a first calibrated map, the array of vectors is a first array of vectors and the modified map is a first modified map; wherein the method further comprises calculating a second map for distorting a second target picture to be projected by the holographic projector by:

receiving a second calibrated map comprising a plurality of second mappings, each second mapping for transforming a respective two-dimensional coordinate of a second array of two-dimensional coordinates to compensate for distortion at a predetermined temperature, each two-dimensional coordinate corresponding to one or more image points of a target picture;
receiving a second array of vectors comprising a vector for each two-dimensional coordinate, each vector of the second array representing a calibrated change of each respective two-dimensional coordinate over a predetermined temperature range;
calculating a second modified map based on the current temperature by, for each coordinate of the second array of two-dimensional coordinates:

multiplying the vector that relates to the respective coordinate of the second array of two-dimensional coordinates by the scaling factor to output a scaled vector; and
applying the scaled vector to the respective mapping of the second calibrated map; and

outputting the second modified map.

10. A method as claimed in claim 9, wherein the mapping of the first calibrated map and the vectors of the first vector array have been determined for when a first wavelength is used in the holographic projection of the first target picture.

11. A method as claimed in claim 10, wherein the mapping of the second calibrated map and the vectors of the second vector array have been determined for when a second wavelength is used in the holographic projection of the second target picture.

12. A method as claimed in any one of claims 9 to 11, further comprising applying the second modified map to the second array of two-dimensional coordinates to output a second modified array of two-dimensional coordinates.

13. A method as claimed in claim 12, further comprising distorting the second target picture based on the modified map.

14. A method claim in claim 13, further comprising calculating a second hologram of the distorted second target picture.

15. A holographic projector comprising a display device arranged to display a hologram of a picture and to spatially modulate light incident thereon in accordance with the hologram, wherein the holographic projector is arranged to form a holographic reconstruction of the picture at a replay plane; wherein the holographic projector further comprises a controller comprising a memory in which is stored:

a calibrated map comprising a plurality of mappings, each mapping for transforming a respective two-dimensional coordinate of an array of two-dimensional coordinates to compensate for a distortion at a predetermined temperature, each two-dimensional coordinate corresponding to one or more image points of a target picture; and
an array of vectors comprising a vector for each two-dimensional coordinate, each vector representing a calibrated change of each respective two-dimensional coordinate over a predetermined temperature range; wherein the controller is arranged to:

determine a current temperature of the holographic projector;
determine a scaling factor based on the difference between the current temperature and the predetermined temperature; and calculate a modified map based on the current temperature by, for each coordinate of the array of two-dimensional coordinates:

> multiplying the vector that relates to the respective coordinate of the array of two-dimensional coordinates by the scaling factor to output a scaled vector; and
>
> applying the scaled vector to the respective mapping of the calibrated map.

## Patentansprüche

1. Verfahren zum Berechnen einer Karte in Echtzeit, wobei die Karte dazu dient, ein Zielbild, das von einem holographischen Projektor projiziert werden soll, zu verzerren und Änderungen bei der aktuellen Temperatur des holographischen Projektors auszugleichen, wobei das Verfahren die folgenden Schritte umfasst:

> Empfangen einer kalibrierten Karte, die eine Vielzahl von Abbildungen umfasst, wobei jede Abbildung dazu dient, eine jeweilige zweidimensionale Koordinate einer Matrix zweidimensionaler Koordinaten zu transformieren, um Verzerrung bei einer vorbestimmten Temperatur auszugleichen, wobei jede zweidimensionale Koordinate einem oder mehreren Bildpunkten eines Zielbildes entspricht;
> Empfangen einer Matrix von Vektoren, die einen Vektor für jede zweidimensionale Koordinate umfasst, wobei jeder Vektor eine kalibrierte Änderung jeder jeweiligen zweidimensionalen Koordinate über einen vorbestimmten Temperaturbereich darstellt;
> Empfangen einer aktuellen Temperatur des holographischen Projektors;
> Ermitteln eines Skalierungsfaktors auf Grundlage der Differenz zwischen der aktuellen Temperatur und der vorbestimmten Temperatur;
> Berechnen einer modifizierten Karte auf Grundlage der aktuellen Temperatur, für jede Koordinate der Matrix zweidimensionaler Koordinaten, durch:
>
>> Multiplizieren des Vektors, der sich auf die jeweilige Koordinate der Matrix zweidimensionaler Koordinaten bezieht, mit dem Skalierungsfaktor, um einen skalierten Vektor auszugeben; und
>> Anwenden des skalierten Vektors auf die jeweilige Abbildung der kalibrierten Karte;
>> Ausgeben der modifizierten Karte.

2. Verfahren nach Anspruch 1, wobei der Skalierungsfaktor eine lineare Abhängigkeit von der Temperatur aufweist.

3. Verfahren nach Anspruch 2, wobei der Schritt des Ermittelns des Skalierungsfaktors das Ermitteln der Differenz zwischen der aktuellen Temperatur und der vorbestimmten Temperatur und das Dividieren dieser Differenz durch den vorbestimmten Temperaturbereich umfasst.

4. Verfahren nach einem der vorstehenden Ansprüche, wobei der Skalierungsfaktor gleich $(T - T0) / (Tmax - Tmin)$ ist; wobei T die aktuelle Temperatur, T0 die vorbestimmte Temperatur, Tmax eine maximale Temperatur des vorbestimmten Temperaturbereichs und Tmin eine minimale Temperatur des vorbestimmten Temperaturbereichs ist.

5. Verfahren nach einem der vorstehenden Ansprüche, weiter umfassend den Schritt des Empfangens der Matrix zweidimensionaler Koordinaten.

6. Verfahren nach einem der vorstehenden Ansprüche, weiter umfassend den Schritt des Anwendens der modifizierten Karte auf die Matrix zweidimensionaler Koordinaten anzuwenden, um eine modifizierte Matrix zweidimensionaler Koordinaten auszugeben.

7. Verfahren nach Anspruch 6, weiter umfassend:

> Empfangen eines Zielbildes, das eine Vielzahl von Bildpunkten umfasst, wobei jede zweidimensionale Koordinate der Matrix zweidimensionaler Koordinaten einem oder mehreren Bildpunkten des Zielbildes entspricht; und
> Vorverzerren des Zielbildes auf Grundlage der modifizierten Matrix zweidimensionaler Koordinaten.

8. Verfahren nach Anspruch 7, weiter umfassend das Berechnen eines Hologramms des vorverzerrten Zielbildes.

9. Verfahren nach einem der vorstehenden Ansprüche, wobei das Zielbild ein erstes Zielbild ist, die Matrix zweidimensionaler Koordinaten eine erste Matrix zweidimensionaler Koordinaten ist, die kalibrierte Karte eine erste kalibrierte Karte ist, die Matrix von Vektoren eine erste Matrix von Vektoren ist und die modifizierte Karte eine erste modifizierte Karte ist; wobei das Verfahren weiter das Berechnen einer zweiten Karte zum Verzerren eines zweiten vom holographischen Projektor zu projizierenden Zielbildes umfasst durch:

> Empfangen einer zweiten kalibrierten Karte, die eine Vielzahl von zweiten Abbildungen umfasst, wobei jede zweite Abbildung dazu dient, eine jeweilige zweidimensionale Koordinate einer zweiten Matrix zweidimensionaler Koordinaten zu transformieren, um Verzerrung bei einer vorbestimmten Temperatur auszugleichen, wobei jede zweidimensionale Koordinate einem oder mehreren Bildpunkten eines Zielbildes entspricht;

Empfangen einer zweiten Matrix von Vektoren, die einen Vektor für jede zweidimensionale Koordinate umfasst, wobei jeder Vektor der zweiten Matrix eine kalibrierte Änderung jeder jeweiligen zweidimensionalen Koordinate über einen vorbestimmten Temperaturbereich darstellt;

Berechnen einer zweiten modifizierten Karte auf Grundlage der aktuellen Temperatur, für jede Koordinate der zweiten Matrix zweidimensionaler Koordinaten, durch:

> Multiplizieren des Vektors, der sich auf die jeweilige Koordinate der zweiten Matrix zweidimensionaler Koordinaten bezieht, mit dem Skalierungsfaktor, um einen skalierten Vektor auszugeben; und
> Anwenden des skalierten Vektors auf die jeweilige Abbildung der zweiten kalibrierten Karte; und

> Ausgeben der zweiten modifizierten Karte.

**10.** Verfahren nach Anspruch 9, wobei die Abbildung der ersten kalibrierten Karte und die Vektoren der ersten Matrix von Vektoren für den Fall bestimmt worden sind, dass bei der holographischen Projektion des ersten Zielbildes eine erste Wellenlänge verwendet wird.

**11.** Verfahren nach Anspruch 10, wobei die Abbildung der zweiten kalibrierten Karte und die Vektoren der zweiten Matrix von Vektoren für den Fall bestimmt worden sind, dass bei der holographischen Projektion des zweiten Zielbildes eine zweite Wellenlänge verwendet wird.

**12.** Verfahren nach einem der Ansprüche 9 bis 11, weiter umfassend das Anwenden der zweiten modifizierten Abbildung auf die zweite Matrix zweidimensionaler Koordinaten, um eine zweite modifizierte Matrix zweidimensionaler Koordinaten auszugeben.

**13.** Verfahren nach Anspruch 12, weiter umfassend das Verzerren des zweiten Zielbildes auf Grundlage der modifizierten Karte.

**14.** Verfahren nach Anspruch 13, weiter umfassend das Berechnen eines zweiten Hologramms des verzerrten zweiten Zielbildes.

**15.** Holographischer Projektor, der eine Anzeigevorrichtung umfasst, die so eingerichtet ist, dass sie ein Hologramm eines Bildes anzeigt und das darauf einfallende Licht entsprechend dem Hologramm räumlich moduliert, wobei der holographische Projektor so eingerichtet ist, dass er eine holographische Rekonstruktion des Bildes auf einer Wiedergabeebene erzeugt;

wobei der holographische Projektor weiter eine Steuereinheit umfasst, die einen Speicher umfasst, in dem Folgendes gespeichert ist:

> eine kalibrierte Karte, die eine Vielzahl von Abbildungen umfasst, wobei jede Abbildung dazu dient, eine jeweilige zweidimensionale Koordinate einer Matrix zweidimensionaler Koordinaten zu transformieren, um Verzerrung bei einer vorbestimmten Temperatur auszugleichen, wobei jede zweidimensionale Koordinate einem oder mehreren Bildpunkten eines Zielbildes entspricht; und
> eine Matrix von Vektoren, die einen Vektor für jede zweidimensionale Koordinate umfasst, wobei jeder Vektor eine kalibrierte Änderung jeder jeweiligen zweidimensionalen Koordinate über einen vorbestimmten Temperaturbereich darstellt;

wobei die Steuereinheit dazu eingerichtet ist:

> eine aktuelle Temperatur des holographischen Projektors zu ermitteln;
> einen Skalierungsfaktor auf Grundlage der Differenz zwischen der aktuellen Temperatur und der vorbestimmten Temperatur zu ermitteln und
> eine modifizierte Karte auf Grundlage der aktuellen Temperatur zu berechnen, für jede Koordinate der Matrix zweidimensionaler Koordinaten durch:

>> Multiplizieren des Vektors, der sich auf die jeweilige Koordinate der Matrix zweidimensionaler Koordinaten bezieht, mit dem Skalierungsfaktor, um einen skalierten Vektor auszugeben; und
>> Anwenden des skalierten Vektors auf die jeweilige Abbildung der kalibrierten Karte.

## Revendications

**1.** Procédé de calcul en temps réel d'une carte, la carte servant à distordre une image cible à projeter par un projecteur holographique et à compenser les variations de la température actuelle du projecteur holographique, le procédé comprenant les étapes de :

réception d'une carte calibrée comprenant une pluralité de cartographies, chaque cartographie servant à transformer une coordonnée bidimensionnelle respective d'un tableau de coordonnées bidimensionnelles pour compenser la distorsion à une température prédéterminée, chaque coordonnée bidimensionnelle correspondant à un ou plusieurs points d'image d'une image cible ;

réception d'un tableau de vecteurs comprenant un vecteur pour chaque coordonnée bidimensionnelle, chaque vecteur représentant un changement calibré de chaque coordonnée bidimensionnelle respective sur une plage de température prédéterminée ;

réception d'une température actuelle du projecteur holographique ;

détermination d'un facteur d'échelle basé sur la différence entre la température actuelle et la température prédéterminée ;

calcul d'une carte modifiée en fonction de la température actuelle, pour chaque coordonnée du tableau de coordonnées bidimensionnelles :

multiplication du vecteur qui se rapporte à la coordonnée respective du tableau de coordonnées bidimensionnelles par le facteur d'échelle pour obtenir un vecteur mis à l'échelle ; et

application du vecteur mis à l'échelle à la cartographie respective de la carte calibrée ;

émission de la carte modifiée.

2. Procédé selon la revendication 1, dans lequel le facteur d'échelle présente une dépendance linéaire à la température.

3. Procédé selon la revendication 2, dans lequel l'étape de détermination du facteur d'échelle comprend la détermination de la différence entre la température actuelle et la température prédéterminée et la division de cette différence par la plage de température prédéterminée.

4. Procédé selon l'une quelconque des revendications précédentes, dans lequel le facteur d'échelle est égal à (T - T0) / (Tmax - Tmin) ; dans lequel T est la température actuelle, TO est la température prédéterminée, Tmax est une température maximale de la plage de températures prédéterminée et Tmin est une température minimale de la plage de températures prédéterminée.

5. Procédé selon l'une quelconque des revendications précédentes, comprenant en outre l'étape de réception du tableau de coordonnées bidimensionnelles.

6. Procédé selon l'une quelconque des revendications précédentes, comprenant en outre l'étape d'application de la carte modifiée au tableau de coordonnées bidimensionnelles pour produire un tableau modifié de coordonnées bidimensionnelles.

7. Procédé selon la revendication 6, comprenant en outre :

la réception d'une image cible comprenant une pluralité de points d'image, dans lequel chaque coordonnée bidimensionnelle du tableau de coordonnées bidimensionnelles correspond à un ou plusieurs points d'image de l'image cible ; et

la pré-distorsion de l'image cible basée sur le tableau modifié de coordonnées bidimensionnelles.

8. Procédé selon la revendication 7, comprenant en outre le calcul d'un hologramme de l'image cible prédistordue.

9. Procédé selon l'une quelconque des revendications précédentes, dans lequel l'image cible est une première image cible, le tableau de coordonnées bidimensionnelles est un premier tableau de coordonnées bidimensionnelles, la carte calibrée est une première carte calibrée, le tableau de vecteurs est un premier tableau de vecteurs et la carte modifiée est une première carte modifiée ; dans lequel le procédé comprend en outre le calcul d'une seconde carte pour distordre une seconde image cible à projeter par le projecteur holographique, par :

la réception d'une seconde carte calibrée comprenant une pluralité de secondes cartographies, chaque seconde cartographie servant à transformer une coordonnée bidimensionnelle respective d'un second tableau de coordonnées bidimensionnelles pour compenser la distorsion à une température prédéterminée, chaque coordonnée bidimensionnelle correspondant à un ou plusieurs points d'image d'une image cible ;

la réception d'un second tableau de vecteurs comprenant un vecteur pour chaque coordonnée bidimensionnelle, chaque vecteur du second tableau représentant un changement calibré de chaque coordonnée bidimensionnelle respective sur une plage de température prédéterminée ;

le calcul d'une seconde carte modifiée en fonction de la température actuelle, pour chaque coordonnée du second tableau de coordonnées bidimensionnelles :

la multiplication du vecteur qui se rapporte à la coordonnée respective du second tableau de coordonnées bidimensionnelles par le facteur d'échelle pour obtenir un vecteur mis à l'échelle ; et
l'application du vecteur mis à l'échelle à la cartographie respective de la seconde carte calibrée ; et

l'émission de la seconde carte modifiée.

10. Procédé selon la revendication 9, dans lequel la cartographie de la première carte calibrée et les vecteurs du premier réseau vectoriel ont été déterminés lorsqu'une première longueur d'onde est utilisée dans la projection holographique de la première image cible.

11. Procédé selon la revendication 10, dans lequel la cartographie de la seconde carte calibrée et les vecteurs du second réseau vectoriel ont été déterminés lorsqu'une seconde longueur d'onde est utilisée dans la projection holographique de la seconde image cible.

12. Procédé selon l'une quelconque des revendications 9 à 11, comprenant en outre l'application de la seconde carte modifiée au second tableau de coordonnées bidimensionnelles pour produire un second tableau modifié de coordonnées bidimensionnelles.

13. Procédé selon la revendication 12, comprenant en outre la distorsion de la seconde image cible basée sur la carte modifiée.

14. Procédé selon la revendication 13, comprenant en outre le calcul d'un second hologramme de la seconde image cible distordue.

15. Projecteur holographique comprenant un dispositif d'affichage conçu pour afficher un hologramme d'une image et pour moduler spatialement la lumière incidente sur celui-ci conformément à l'hologramme, dans lequel le projecteur holographique est agencé de façon à former une reconstitution holographique de l'image sur un plan de lecture ;
dans lequel le projecteur holographique comprend en outre un dispositif de commande comprenant une mémoire dans laquelle sont stockés :

une carte calibrée comprenant une pluralité de cartographies, chaque cartographie servant à transformer une coordonnée bidimensionnelle respective d'un tableau de coordonnées bidimensionnelles afin de compenser une distorsion à une température prédéterminée, chaque coordonnée bidimensionnelle correspondant à un ou plusieurs points d'image d'une image cible ; et
un tableau de vecteurs comprenant un vecteur pour chaque coordonnée bidimensionnelle, chaque vecteur représentant une variation calibrée de chaque coordonnée bidimensionnelle respective sur une plage de température prédéterminée ;
dans lequel le dispositif de commande est configuré pour :

déterminer une température actuelle du projecteur holographique ;
déterminer un facteur d'échelle en fonction de la différence entre la température actuelle et la température prédéterminée ; et
calculer une carte modifiée en fonction de la température actuelle, pour chaque coordonnée du tableau de coordonnées bidimensionnelles, en :

multipliant le vecteur qui se rapporte à la coordonnée respective du tableau de coordonnées bidimensionnelles par le facteur d'échelle pour obtenir un vecteur mis à l'échelle ; et
appliquant le vecteur mis à l'échelle à la cartographie respective de la carte calibrée.

FIGURE 1

230

210

202A

250

280A

253

256

259

213A  211A

FIGURE 2A

FIGURE 2B

FIGURE 2C

FIGURE 3

FIGURE 4

FIGURE 5

FIGURE 6B

FIGURE 6A

702

704

706

708

710

712

FIGURE 7

FIGURE 8

FIGURE 9

FIGURE 10

FIGURE 11

**EP 4 459 380 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3839638 A1
- GB 2498170 A
- GB 2501112 A